# EUROPEAN PATENT APPLICATION

(11) **EP 4 832 636 A1**
(43) Date of publication of application: **28.10.2026**
(21) Application number: 25741554.7
(22) Date of filing: 16.01.2025
(51) Int. Cl.: H04W 72/231

(54) **METHOD AND APPARATUS USED IN COMMUNICATION NODE FOR WIRELESS COMMUNICATION**

(30) Priority: 16.01.2024 CN 202410064547
(71) Applicant: Honor Device Co., Ltd., Shenzhen, Guangdong 518040 (CN)
(72) Inventor: YU, Qiaoling, Shenzhen, Guangdong 518040 (CN); ZHANG, Xiaobo, Shenzhen, Guangdong 518040 (CN)
(74) Representative: Isarpatent
(86) International application number: PCT/CN2025/072627
(87) International publication number: WO 2025/152993

(57) **Abstract**

This application discloses a method and apparatus in a communication node used for wireless communication. A communication node receives a first RRC message, where the first RRC message includes configuration information of at least a first candidate cell; the configuration information of at least the first candidate cell indicates a target configuration, a first condition, and at least one CG resource for the first candidate cell, and any CG resource in the at least one CG resource is associated with at least one reference signal of the first candidate cell; and in response to a measurement result for at least a first reference signal meeting the first condition, applies the target configuration and sends first signaling on a first CG resource in the at least one CG resource, where sending of the first signaling on the first CG resource depends on at least the first CG resource being associated with the first reference signal; and the first reference signal is a reference signal of the first candidate cell. The solution provided in this application improves mobility robustness.

## Description

This application claims priority to Chinese Patent Application No. 202410064547.1, filed with the China National Intellectual Property Administration on January 16, 2024 and entitled "METHOD AND APPARATUS IN COMMUNICATION NODE USED FOR WIRELESS COMMUNICATION", which is incorporated herein by reference in its entirety.

### TECHNICAL FIELD

This application relates to a transmission method and apparatus in a wireless communication system, and in particular, to a method and apparatus for transmission of configured grant (Configured Grant, CG).

### BACKGROUND

With the continuous development of wireless communication, requirements for mobility, a transmission latency, and a system capacity are increasingly high, 3GPP completes standardization of L1 (Layer 1, layer 1)/L2 (Layer 2, layer 2) triggered mobility (L1/L2 Triggered Mobility, LTM) via the "further NR (New Radio, new radio) mobility enhancements (Further NR mobility enhancements)" work item (Work Item, WI) in Release 18, where configuring CG resources for a candidate cell and performing RACH-less LTM cell switch (cell switch) on the candidate cell are supported.

To further enhance mobility, conditional (Conditional) LTM becomes important research content for 3GPP Release 19.

### SUMMARY

For Release 18 RACH-less LTM cell switch, if a UE receives an LTM Cell Switch Command MAC (Medium Access Control, medium access control) CE (Control Element, control element) that indicates a TCI (Transmission Configuration Indicator, transmission configuration indicator) state (state) of a candidate cell, an SSB (Synchronization Signal Block, or SS (Synchronization Signal)/PBCH (Physical Broadcast Channel, physical broadcast channel) block) associated with a CG resource for sending on the candidate cell needs to be the same as an SSB associated with the TCI state indicated by the LTM Cell Switch Command MAC CE. The inventors have found through research that, for conditional LTM, if the UE does not receive the LTM Cell Switch Command MAC CE, a network cannot indicate the TCI state, and thus the TCI state cannot be determined by a network indication. Therefore, for conditional LTM, how to determine a CG resource used for sending on a candidate cell is an issue that needs to be researched.

In view of the foregoing problem, this application provides a CG solution. In the foregoing problem descriptions, an NR system is taken as an example. This application is also applicable to scenarios of a next generation system like 5G-A or 6G, achieving similar technical effects to the NR system. Furthermore, although this application provides specific implementations for LTM, this application can also be used in scenarios such as CHO (Conditional Handover, conditional handover) or CPC (Conditional PSCell (Primary SCG (Secondary Cell Group) Cell) Change), achieving similar technical effects to LTM. Further, a unified design scheme used for different scenarios further helps reduce hardware complexity and costs. Further, although this application provides specific implementations for cell-level mobility, this application can also be used in scenarios of beam-level mobility, achieving similar technical effects to cell-level mobility. Further, although an original intention of this application is for a Uu air interface, this application can also be used for a PC5 interface, achieving similar technical effects to the Uu air interface. Further, although the original intention of this application is for a terminal-to-base station scenario, this application is also applicable to a V2X (Vehicle-to-Everything, vehicle-to-everything) scenario, and communication scenarios between a terminal and a relay, and between a relay and a base station, to achieve similar technical effects to the terminal-to-base station scenario. Further, although the original intention of this application is for the terminal-to-base station scenario, this application is also applicable to an IAB (Integrated Access and Backhaul, integrated access and backhaul) communication scenario, achieving similar technical effects to the terminal-to-base station scenario. Further, although the original intention of this application is for a terrestrial network (Terrestrial Network, TN) scenario, this application is also applicable to a non-terrestrial network (Non-Terrestrial Network, NTN) communication scenario, to achieve similar technical effects to the TN scenario. In addition, using a unified solution for different scenarios also helps to reduce hardware complexity and costs.

In an embodiment, interpretation of terminology (Terminology) in this application refers to the definitions in the 3GPP specification protocol TS36 series.

In an embodiment, the interpretation of the terminology in this application refers to the definitions in the 3GPP specification protocol TS38 series.

In an embodiment, the interpretation of the terminology in this application refers to the definitions in the 3GPP specification protocol TS37 series.

It should be noted that, in a case of no conflict, embodiments and features in embodiments of any node in this application can be applied to any other node. In a case of no conflict, the embodiments of this application and the features in the embodiments may be arbitrarily combined with each other.

This application discloses a method in a first node used for wireless communication, including:
receiving a first RRC (Radio Resource Control, radio resource control) message, where the first RRC message includes configuration information of at least a first candidate cell, the configuration information of at least the first candidate cell indicates a target configuration, a first condition, and at least one CG resource for the first candidate cell, and any CG resource in the at least one CG resource is associated with at least one reference signal of the first candidate cell; and
in response to a measurement result for at least a first reference signal meeting the first condition, applying the target configuration and sending first signaling on a first CG resource, where the first CG resource is one of the at least one CG resource; and
sending of the first signaling on the first CG resource depends on at least the first CG resource being associated with the first reference signal; and the first reference signal is a reference signal of the first candidate cell.

In an embodiment, a problem to be resolved by this application includes: how to determine the first CG resource.

In an embodiment, a characteristic of the method includes: The first node determines the first CG resource based on the first condition.

In an embodiment, a characteristic of the method includes: The first node determines, based on the first condition, to send the first signaling on the first CG resource.

In an embodiment, a characteristic of the method includes: The first CG resource is associated with the first reference signal; and the measurement result for at least the first reference signal meets the first condition.

In an embodiment, a characteristic of the method includes: In response to the measurement result for at least the first reference signal meeting the first condition, the target configuration is applied and the first signaling is sent on the first CG resource, where the first CG resource is one of the at least one CG resource.

In an embodiment, a benefit of the method includes: being beneficial for improving mobility robustness.

In an embodiment, a benefit of the method includes: improving transmission reliability.

According to an aspect of this application, sending of the first signaling on the first CG resource depends on timing advance for the first candidate cell being valid.

In an embodiment, a characteristic of the method includes: It is assumed that the timing advance for the first candidate cell is not valid, and then the first signaling is not sent on the first CG resource.

In an embodiment, a benefit of the method includes: improving transmission reliability of the first signaling.

In an embodiment, a benefit of the method includes: reducing a probability of a transmission failure of the first signaling.

According to an aspect of this application, sending of the first signaling on the first CG resource depends on the first reference signal being associated with at least one TCI state; and the at least one TCI state is activated.

In an embodiment, a characteristic of the method includes: It is assumed that the first reference signal is not associated with any activated TCI state, and then the first signaling is not sent on the first CG resource.

In an embodiment, a benefit of the method includes: improving transmission reliability of the first signaling.

In an embodiment, a benefit of the method includes: reducing a probability of a transmission failure of the first signaling.

According to an aspect of this application, the following is included:
the first receiver, receiving second signaling, where
the second signaling indicates activation of at least one of the at least one TCI state; and the second signaling is signaling of a protocol layer below an RRC sublayer.

In an embodiment, a benefit of the method includes: activating the TCI state in a more timely manner.

In an embodiment, a benefit of the method includes: activating the TCI state more flexibly.

According to an aspect of this application, the configuration information of at least the first candidate cell includes a first information block, and the first information block indicates activation of at least one of the at least one TCI state.

In an embodiment, a benefit of the method includes: reducing signaling overheads.

In an embodiment, a benefit of the method includes: activating an associated TCI state while configuring the first CG resource, thereby avoiding inactivation of the TCI state when the first condition is met.

According to an aspect of this application, the first signaling indicates a first TCI state; and the configuration information of at least the first candidate cell includes the first TCI state.

In an embodiment, a benefit of the method includes: improving transmission reliability of the first signaling by indicating the TCI state.

In an embodiment, a benefit of the method includes: reducing a probability of a transmission failure of the first signaling by indicating the TCI state.

According to an aspect of this application, the measurement result for at least the first reference signal meeting the first condition includes: a measurement result for at least a second reference signal meeting the first condition; and the second reference signal is a reference signal of an SpCell.

In an embodiment, a benefit of the method includes: determining, based on the measurement result for the first reference signal and the measurement result for the second reference signal, that the first condition is met, thereby improving mobility robustness.

In an embodiment, a benefit of the method includes: determining, based on the measurement result for the first reference signal and the measurement result for the second reference signal, that the first condition is met, thereby avoiding a ping-pong effect.

According to an aspect of this application, the following is included:
measuring a target reference signal set, where the target reference signal set includes one or more reference signals of the first candidate cell, and the first reference signal is a reference signal in the target reference signal set; and
measurement of the target reference signal set depends on one TCI state associated with any reference signal in the target reference signal set being activated.

In an embodiment, a characteristic of the method includes: The TCI state associated with a measured reference signal of the first candidate cell is activated.

In an embodiment, a benefit of the method includes: improving measurement effectiveness.

In an embodiment, a benefit of the method includes: reducing measured reference signals, and facilitating power saving of a UE.

According to an aspect of this application, sending of the first signaling on the first CG resource depends on a target threshold being not configured.

In an embodiment, a benefit of the method includes: There is no need to determine the first CG resource by using an additionally configured threshold.

According to an aspect of this application, sending of the first signaling on the first CG resource depends on a first time interval being not greater than a first threshold; the first time interval depends on a time domain position of the first CG resource; and the first threshold is indicated by the first RRC message or the first threshold is determined by the first node.

In an embodiment, a characteristic of the method includes: It is assumed that the first time interval is greater than the first threshold, and then the first signaling is not sent on the first CG resource.

In an embodiment, a benefit of the method includes: shortening a sending delay of the first signaling.

This application discloses a method in a second node used for wireless communication, including:
sending a first RRC message, where the first RRC message includes configuration information of at least a first candidate cell, the configuration information of at least the first candidate cell indicates a target configuration, a first condition, and at least one CG resource for the first candidate cell, and any CG resource in the at least one CG resource is associated with at least one reference signal of the first candidate cell; and
in response to a measurement result for at least a first reference signal meeting the first condition, a receiving party of the first RRC message applies the target configuration and sends first signaling on a first CG resource, and the first CG resource is one of the at least one CG resource; sending of the first signaling on the first CG resource depends on at least the first CG resource being associated with the first reference signal; and the first reference signal is a reference signal of the first candidate cell.

According to an aspect of this application, sending of the first signaling on the first CG resource depends on timing advance for the first candidate cell being valid.

According to an aspect of this application, sending of the first signaling on the first CG resource depends on the first reference signal being associated with at least one TCI state; and the at least one TCI state is activated.

According to an aspect of this application, the following is included:
sending second signaling, where
the second signaling indicates activation of at least one of the at least one TCI state; and the second signaling is signaling of a protocol layer below an RRC sublayer.

According to an aspect of this application, the configuration information of at least the first candidate cell includes a first information block, and the first information block indicates activation of at least one of the at least one TCI state.

According to an aspect of this application, the first signaling indicates a first TCI state; and the configuration information of at least the first candidate cell includes the first TCI state.

According to an aspect of this application, the measurement result for at least the first reference signal meeting the first condition includes: a measurement result for at least a second reference signal meeting the first condition; and the second reference signal is a reference signal of an SpCell.

According to an aspect of this application, the receiving party of the first RRC message measures a target reference signal set, the target reference signal set includes one or more reference signals of the first candidate cell, and the first reference signal is a reference signal in the target reference signal set; and measurement of the target reference signal set depends on a TCI state associated with any reference signal in the target reference signal set being activated.

According to an aspect of this application, sending of the first signaling on the first CG resource depends on a target threshold being not configured.

According to an aspect of this application, sending of the first signaling on the first CG resource depends on a first time interval being not greater than a first threshold; the first time interval depends on a time domain position of the first CG resource; and the first threshold is indicated by the first RRC message or the first threshold is determined by the first node.

This application discloses a method in a third node used for wireless communication, including:
receiving first signaling on a first CG resource, where
a sending party of the first signaling receives a first RRC message, and the first RRC message includes configuration information of at least a first candidate cell; the configuration information of at least the first candidate cell indicates a target configuration, a first condition, and at least one CG resource for the first candidate cell, and any CG resource in the at least one CG resource is associated with at least one reference signal of the first candidate cell; in response to a measurement result for at least a first reference signal meeting the first condition, the sending party of the first signaling applies the target configuration and sends the first signaling on a first CG resource, and the first CG resource is one of the at least one CG resource; sending of the first signaling on the first CG resource depends on at least the first CG resource being associated with the first reference signal; and the first reference signal is a reference signal of the first candidate cell.

According to an aspect of this application, sending of the first signaling on the first CG resource depends on timing advance for the first candidate cell being valid.

According to an aspect of this application, sending of the first signaling on the first CG resource depends on the first reference signal being associated with at least one TCI state; and the at least one TCI state is activated.

According to an aspect of this application, the sending party of the first signaling receives second signaling, where the second signaling indicates activation of at least one of the at least one TCI state; and the second signaling is signaling of a protocol layer below an RRC sublayer.

According to an aspect of this application, the configuration information of at least the first candidate cell includes a first information block, and the first information block indicates activation of at least one of the at least one TCI state.

According to an aspect of this application, the first signaling indicates a first TCI state; and the configuration information of at least the first candidate cell includes the first TCI state.

According to an aspect of this application, the measurement result for at least the first reference signal meeting the first condition includes: a measurement result for at least a second reference signal meeting the first condition; and the second reference signal is a reference signal of an SpCell.

According to an aspect of this application, the following is included:
sending a target reference signal set, where the target reference signal set includes one or more reference signals of the first candidate cell, and the first reference signal is a reference signal in the target reference signal set; and
measurement of the target reference signal set depends on one TCI state associated with any reference signal in the target reference signal set being activated.

According to an aspect of this application, sending of the first signaling on the first CG resource depends on a target threshold being not configured.

According to an aspect of this application, sending of the first signaling on the first CG resource depends on a first time interval being not greater than a first threshold; the first time interval depends on a time domain position of the first CG resource; and the first threshold is indicated by the first RRC message or the first threshold is determined by the first node.

This application discloses a first node used for wireless communication, including:
a first receiver, receiving a first RRC message, where the first RRC message includes configuration information of at least a first candidate cell, the configuration information of at least the first candidate cell indicates a target configuration, a first condition, and at least one CG resource for the first candidate cell, and any CG resource in the at least one CG resource is associated with at least one reference signal of the first candidate cell; and
a first processor, in response to a measurement result for at least a first reference signal meeting the first condition, applying the target configuration and sending first signaling on a first CG resource, where the first CG resource is one of the at least one CG resource; and
where sending of the first signaling on the first CG resource depends on at least the first CG resource being associated with the first reference signal; and the first reference signal is a reference signal of the first candidate cell.

This application discloses a second node used for wireless communication, including:
a second transmitter, sending a first RRC message, where the first RRC message includes configuration information of at least a first candidate cell, the configuration information of at least the first candidate cell indicates a target configuration, a first condition, and at least one CG resource for the first candidate cell, and any CG resource in the at least one CG resource is associated with at least one reference signal of the first candidate cell; and
in response to a measurement result for at least a first reference signal meeting the first condition, a receiving party of the first RRC message applies the target configuration and sends first signaling on a first CG resource, and the first CG resource is one of the at least one CG resource; sending of the first signaling on the first CG resource depends on at least the first CG resource being associated with the first reference signal; and the first reference signal is a reference signal of the first candidate cell.

This application discloses a third node used for wireless communication, including:
a third receiver, receiving first signaling on a first CG resource, where
a sending party of the first signaling receives a first RRC message, and the first RRC message includes configuration information of at least a first candidate cell; the configuration information of at least the first candidate cell indicates a target configuration, a first condition, and at least one CG resource for the first candidate cell, and any CG resource in the at least one CG resource is associated with at least one reference signal of the first candidate cell; in response to a measurement result for at least a first reference signal meeting the first condition, the sending party of the first signaling applies the target configuration and sends the first signaling on a first CG resource, and the first CG resource is one of the at least one CG resource; sending of the first signaling on the first CG resource depends on at least the first CG resource being associated with the first reference signal; and the first reference signal is a reference signal of the first candidate cell.

This application discloses a first node used for wireless communication, including:
a first receiver, receiving a first RRC message, where the first RRC message includes configuration information of at least a first candidate cell, the first candidate cell is configured for an SpCell of the first node, the configuration information of at least the first candidate cell indicates a target configuration, a first condition, and at least one CG resource, and any CG resource in the at least one CG resource is associated with at least one reference signal of the first candidate cell; and
a first processor, measuring a target reference signal set, where the target reference signal set includes one or more reference signals of the first candidate cell, and the first reference signal is a reference signal in the target reference signal set; and in response to a measurement result for at least a first reference signal meeting the first condition, applying the target configuration, where
measurement of the target reference signal set depends on one TCI state associated with any reference signal in the target reference signal set being activated.

This application discloses a first node used for wireless communication, including:
a first receiver, receiving a first RRC message, where the first RRC message includes configuration information of at least a first candidate cell, the configuration information of at least the first candidate cell indicates a target configuration, a first condition, and at least one CG resource for the first candidate cell, and any CG resource in the at least one CG resource is associated with at least one reference signal of the first candidate cell; and
a first processor, in response to a measurement result for at least a first reference signal meeting the first condition, applying the target configuration and sending first signaling on a first CG resource, where the first CG resource is one of the at least one CG resource; and
sending of the first signaling on the first CG resource depends on at least one of the timing advance for at least the first candidate cell being valid, the first reference signal being associated with at least one TCI state, or a first time interval being not greater than a first threshold; the first reference signal is a reference signal of the first candidate cell; the at least one TCI state is activated; the first time interval depends on a time domain position of the first CG resource; and the first threshold is indicated by the first RRC message or the first threshold is determined by the first node.

According to an aspect of this application, a measurement result for at least one reference signal associated with the first CG resource meets a given threshold.

According to an aspect of this application, the measurement result for the at least one reference signal associated with the first CG resource is respectively an SS-RSRP, and the given threshold is a rach-less-RSRP-ThresholdSSB.

According to an aspect of this application, the measurement result for the at least one reference signal associated with the first CG resource is respectively a CSI-RSRP, and the given threshold is a rach-less-RSRP-ThresholdCSI-RS.

This application discloses a first node used for wireless communication, including:
a first receiver, receiving a first RRC message, where the first RRC message includes configuration information of at least a first candidate cell, the configuration information of at least the first candidate cell indicates a target configuration, a first condition, and at least one CG resource for the first candidate cell, and any CG resource in the at least one CG resource is associated with at least one reference signal of the first candidate cell; and
a first processor, in response to a measurement result for at least a first reference signal meeting the first condition, applying the target configuration and sending first signaling on a first CG resource, where the first CG resource is one of the at least one CG resource; and
the first reference signal is a reference signal of the first candidate cell; the first signaling indicates a first TCI state; and the configuration information of at least the first candidate cell includes the first TCI state.

In an embodiment, compared with a conventional solution, this application has at least one of the following advantages:
- . being beneficial for improving mobility robustness;
- . improving transmission reliability;
- . activating the TCI state in a more timely manner;
- . activating the TCI state more flexibly;
- . reducing signaling overheads;
- . avoiding the ping-pong effect;
- . facilitating power saving of the UE; and
- . shortening the sending delay of the first signaling.

### BRIEF DESCRIPTION OF DRAWINGS

Other features, objectives, and advantages of this application become clearer by reading detailed descriptions of non-limiting embodiments with reference to the following drawings:
FIG. 1 is a flowchart of transmissions of a first RRC message and first signaling according to an embodiment of this application;
FIG. 2 is a schematic diagram of a network architecture according to an embodiment of this application;
FIG. 3 is a schematic diagram of an embodiment of radio protocol architectures for a user plane and a control plane according to an embodiment of this application;
FIG. 4 is a schematic diagram of a first communication device and a second communication device according to an embodiment of this application;
FIG. 5 is a flowchart of a transmission of a wireless signal according to an embodiment of this application;
FIG. 6 is a schematic diagram of sending of first signaling on a first CG resource depending on timing advance for a first candidate cell being valid according to an embodiment of this application;
FIG. 7 is a schematic diagram of sending of first signaling on a first CG resource depending on a first reference signal being associated with at least one TCI state according to an embodiment of this application;
FIG. 8 is a schematic diagram of sending of first signaling on a first CG resource depending on a first time interval being not greater than a first threshold according to an embodiment of this application;
FIG. 9 is a schematic diagram of a first information block included in configuration information of a first candidate cell indicating activation of at least one of at least one TCI state according to an embodiment of this application;
FIG. 10 is a schematic diagram of first signaling indicating a first TCI state according to an embodiment of this application;
FIG. 11 is a schematic diagram of a first condition being met according to an embodiment of this application;
FIG. 12 is a block diagram of a structure of a processing apparatus used in a first node according to an embodiment of this application;
FIG. 13 is a block diagram of a structure of a processing apparatus used in a second node according to an embodiment of this application;
FIG. 14 is a block diagram of a structure of a processing apparatus used in a second node according to an embodiment of this application; and
FIG. 15 a block diagram of a structure of a processing apparatus used in a third node according to an embodiment of this application.

### DESCRIPTION OF EMBODIMENTS

The technical solutions of this application are further described in detail below with reference to the accompanying drawings. It should be noted that, in a case of no conflict, embodiments of this application and features in the embodiments may be arbitrarily combined with each other.

### Embodiment 1

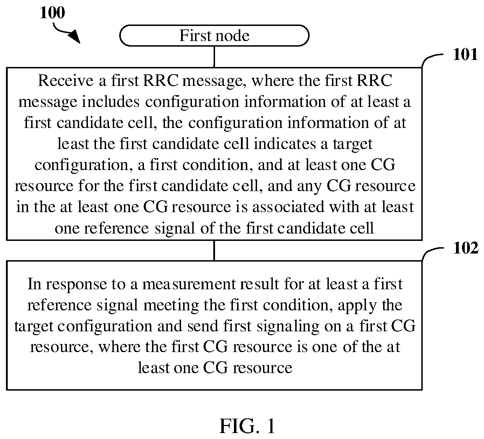

Embodiment 1 illustrates a flowchart of transmissions of a first RRC message and first signaling according to an embodiment of this application, as shown in FIG. 1. In FIG. 1, each block represents a step, and it should be particularly emphasized that an order of the blocks in the figure does not represent a time sequence relationship between the represented steps.

In Embodiment 1, in step 101, a first node in this application receives a first RRC message, where the first RRC message includes configuration information of at least a first candidate cell; and the configuration information of at least the first candidate cell indicates a target configuration, a first condition, and at least one CG resource for the first candidate cell, and any CG resource in the at least one CG resource is associated with at least one reference signal of the first candidate cell; and in step 102, in response to a measurement result for at least a first reference signal meeting the first condition, applies the target configuration and sends first signaling on a first CG resource, where the first CG resource is one of the at least one CG resource; sending of the first signaling on the first CG resource depends on at least the first CG resource being associated with the first reference signal; and the first reference signal is a reference signal of the first candidate cell.

In an embodiment, the first RRC message is transmitted by using a DCCH (Dedicated Control Channel, dedicated control channel) message.

In an embodiment, the first RRC message is transmitted by using a DTCH (Dedicated Traffic Channel, dedicated traffic channel) message.

In an embodiment, the first RRC message is transmitted by using an SCCH (Sidelink Control Channel, sidelink control channel) message.

In an embodiment, the first RRC message is at least one RRC message.

In an embodiment, the first RRC message is at least one RRC IE (Information Element, information element).

In an embodiment, the first RRC message is at least one RRC field (Field).

In an embodiment, the first RRC message is an RRCReconfiguration message.

In an embodiment, the first RRC message is an RRCResume message.

In an embodiment, the first RRC message is an RRCSetup message.

In an embodiment, the first RRC message includes at least one CondReconfigToAddModList, and the at least one CondReconfigToAddModList includes the configuration information of at least the first candidate cell.

In an embodiment, the first RRC message includes at least one LTM-Config, and the at least one LTM-Config includes the configuration information of at least the first candidate cell.

In an embodiment, the first RRC message includes at least one CondReconfigToAddModList and at least one LTM-Config, and the CondReconfigToAddModList and the at least one LTM-Config include the configuration information of at least the first candidate cell.

In an embodiment, the configuration information of at least the first candidate cell is configuration information of the first candidate cell.

In an embodiment, the configuration information of at least the first candidate cell is configuration information of a plurality of candidate cells, and the configuration information of the plurality of candidate cells includes the configuration information of the first candidate cell.

In a sub-embodiment of the foregoing embodiment, the first candidate cell is any one of the plurality of candidate cells.

In a sub-embodiment of the foregoing embodiment, in response to the first RRC message being received, evaluation of the plurality of candidate cells starts.

In a sub-embodiment of the foregoing embodiment, in response to the first RRC message being received, evaluation of at least one of the plurality of candidate cells starts, where evaluation of at least one of the plurality of candidate cells does not start.

In a sub-embodiment of the foregoing embodiment, the first candidate cell is one candidate cell whose evaluation starts in the plurality of candidate cells.

In a sub-embodiment of the foregoing embodiment, the candidate cell whose evaluation does not start in the plurality of candidate cells is a subsequent (subsequent) candidate cell.

In a sub-embodiment of the foregoing embodiment, the candidate cell whose evaluation does not start in the plurality of candidate cells is not indicated to start evaluation.

In a sub-embodiment of the foregoing embodiment, evaluation of the candidate cell whose evaluation does not start in the plurality of candidate cells depends on indication of RRC signaling.

In a sub-embodiment of the foregoing embodiment, evaluation of the candidate cell whose evaluation does not start in the plurality of candidate cells depends on indication of a MAC CE.

In a sub-embodiment of the foregoing embodiment, evaluation of the candidate cell whose evaluation does not start in the plurality of candidate cells depends on indication of DCI (Downlink Control Information, downlink control information).

In an embodiment, the first candidate cell is an LTM candidate cell.

In an embodiment, the first candidate cell is a CHO candidate cell.

In an embodiment, the first candidate cell is a CPC candidate cell.

In an embodiment, the first candidate cell is configured for a PCell (Primary Cell).

In an embodiment, the first candidate cell is a candidate PCell.

In an embodiment, the first candidate cell is configured for an MCG (Master Cell Group).

In an embodiment, the first candidate cell is configured for a PSCell.

In an embodiment, the first candidate cell is configured for an SCG.

In an embodiment, the first candidate cell is a candidate PSCell.

In an embodiment, the configuration information of the first candidate cell is a CHO candidate configuration of the first candidate cell.

In a sub-embodiment of the foregoing embodiment, the first RRC message includes a ConditionalReconfiguration, and the ConditionalReconfiguration includes the configuration information of the first candidate cell.

In a sub-embodiment of the foregoing embodiment, the first RRC message includes a CondReconfigToAddMod, and the CondReconfigToAddMod includes the configuration information of the first candidate cell.

In a sub-embodiment of the foregoing embodiment, the configuration information of the first candidate cell includes a CondReconfigId, and the CondReconfigId indicates the first candidate cell.

In a sub-embodiment of the foregoing embodiment, the configuration information of the first candidate cell includes a PhysCellId, and the PhysCellId indicates a PCI (Physical Cell Identity, physical cell identity) of the first candidate cell.

In an embodiment, the configuration information of the first candidate cell is an LTM candidate configuration of the first candidate cell.

In a sub-embodiment of the foregoing embodiment, an RRC IE whose name includes LTM and Candidate in the first RRC message includes the configuration information of the first candidate cell.

In a sub-embodiment of the foregoing embodiment, the first RRC message includes an LTM-Candidate, and the LTM-Candidate includes the configuration information of the first candidate cell.

In a sub-embodiment of the foregoing embodiment, the configuration information of the first candidate cell includes an LTM-CandidateId, and the LTM-CandidateId indicates the first candidate cell.

In a sub-embodiment of the foregoing embodiment, the configuration information of the first candidate cell includes a PhysCellId, and the PhysCellId indicates a PCI of the first candidate cell.

In a sub-embodiment of the foregoing embodiment, the configuration information of the first candidate cell includes an SSB configuration of the first candidate cell.

In a sub-embodiment of the foregoing embodiment, the configuration information of the first candidate cell includes a physical layer common configuration of the first candidate cell.

In a sub-embodiment of the foregoing embodiment, the configuration information of the first candidate cell includes a C-RNTI of the first node in the first candidate cell.

In an embodiment, the target configuration indicates the at least one CG resource.

In an embodiment, a configuration other than the target configuration in the configuration information of the first candidate cell indicates the at least one CG resource.

In an embodiment, the target configuration indicates the first condition.

In an embodiment, a configuration other than the target configuration in the configuration information of the first candidate cell indicates the first condition.

In an embodiment, the target configuration is an entire RRCReconfiguration message or a part of an RRCReconfiguration message.

In a sub-embodiment of the foregoing embodiment, the target configuration is an RRCReconfiguration message.

In a sub-embodiment of the foregoing embodiment, the target configuration includes an RRCReconfiguration message.

In a sub-embodiment of the foregoing embodiment, the target configuration is at least some fields in an RRCReconfiguration message.

In a sub-embodiment of the foregoing embodiment, the RRCReconfiguration message is indicated by an RRC field whose name includes ltm, Candidate, and Config.

In a sub-embodiment of the foregoing embodiment, the RRCReconfiguration message is indicated by an ltm-CandidateConfig-r18 field.

In a sub-embodiment of the foregoing embodiment, the RRCReconfiguration message is indicated by an RRC field whose name includes cond, RRC, and Reconfig.

In a sub-embodiment of the foregoing embodiment, the RRCReconfiguration message is indicated by a condRRCReconfig-r16 field.

In an embodiment, the target configuration includes a CellGroupConfig.

In an embodiment, the target configuration includes a ServingCellConfigCommon.

In an embodiment, the target configuration includes an SpCellConfig.

In an embodiment, the target configuration includes a ReconfigurationWithSync.

In an embodiment, the target configuration includes a ServingCellConfigCommon.

In an embodiment, the target configuration includes a newUE-Identity.

In an embodiment, the target configuration includes a t304.

In an embodiment, the configuration information of the first candidate cell includes a condExecutionCond, and the condExecutionCond indicates the first condition.

In an embodiment, the configuration information of the first candidate cell includes a condExecutionCondSCG, and the condExecutionCondSCG indicates the first condition.

In an embodiment, indicating the first condition means including a threshold of the first condition.

In an embodiment, indicating the first condition means including an index of the first condition.

In an embodiment, indicating the first condition means including a MeasId associated with the first condition.

In an embodiment, the first condition is a triggering condition (triggering event).

In an embodiment, the first condition is an execution condition (execution condition).

In an embodiment, the first condition is a condition triggering application of the target configuration.

In an embodiment, the first condition is a condition triggering movement to the first candidate cell.

In an embodiment, the first condition is a condition triggering movement to any one of the plurality of candidate cells.

In an embodiment, the movement is handover (handover).

In an embodiment, the movement is layer 3 handover (handover).

In an embodiment, the movement is LTM cell switch.

In an embodiment, the first condition is specific to the first candidate cell.

In an embodiment, the first condition is configured for only one candidate cell, and the only one candidate cell is the first candidate cell.

In an embodiment, the first condition is common among the plurality of candidate cells, and the first candidate cell is one of the plurality of candidate cells.

In an embodiment, the first condition is configured for the plurality of candidate cells, and the first candidate cell is one of the plurality of candidate cells.

In an embodiment, the first condition is specific to conditional LTM.

In an embodiment, the first condition is specific to CHO.

In an embodiment, the first condition is specific to CPC.

In an embodiment, any CG resource in the at least one CG resource is a configured uplink grant.

In an embodiment, any CG resource in the at least one CG resource is provided by an RRC.

In an embodiment, any CG resource in the at least one CG resource is provided by a PDCCH (Physical downlink control channel, physical downlink control channel).

In an embodiment, a type of any CG resource in the at least one CG resource is configured grant Type 1.

In an embodiment, a type of any CG resource in the at least one CG resource is configured grant Type 2.

In an embodiment, any CG resource in the at least one CG resource is used for RACH-less LTM cell switch.

In an embodiment, any CG resource in the at least one CG resource is an uplink grant configured as configured grant Type 1 for LTM cell switch.

In an embodiment, any CG resource in the at least one CG resource is used for an initial uplink transmission (initial uplink transmission) on the first candidate cell in RACH-less LTM cell switch.

In an embodiment, the at least one CG resource is configured on a same UL (Uplink) BWP (Bandwidth Part) of the first candidate cell.

In an embodiment, the at least one CG resource is configured on a plurality of UL BWPs of the first candidate cell.

In an embodiment, each CG resource in the at least one CG resource is configured by a ConfiguredGrantConfig.

In an embodiment, any two different CG resources in the at least one CG resource are configured by two different ConfiguredGrantConfig.

In an embodiment, each CG resource in the at least one CG resource is configured by an RRC field whose name includes CG, LTM, and Configuration.

In an embodiment, each CG resource in the at least one CG resource is configured by a CG-LTM-Configuration.

In an embodiment, a reference signal of the first candidate cell that is associated with any CG resource in the at least one CG resource is configurable.

In an embodiment, a reference signal of the first candidate cell that is associated with any CG resource in the at least one CG resource belongs to an SSB indicated by an LTM-SSB-Config.

In an embodiment, a reference signal of the first candidate cell that is associated with any CG resource in the at least one CG resource is a subset of an SSB indicated by an LTM-SSB-Config.

In an embodiment, a reference signal of the first candidate cell that is associated with any CG resource in the at least one CG resource is indicated by an ltm-SSB-Subset.

In an embodiment, a reference signal of the first candidate cell that is associated with any CG resource in the at least one CG resource is indicated by an ltm-SSB-Subset and an ltm-SSB-PerCG-PUSCH.

In an embodiment, the ltm-SSB-Subset includes a bitmap, and the bitmap occupies 4 bits, 8 bits, or 64 bits.

In an embodiment, the ltm-SSB-Subset includes a shortBitmap, a mediumBitmap, or a longBitmap.

In an embodiment, the first reference signal is sent on the first candidate cell.

In an embodiment, the first reference signal belongs to the first candidate cell.

In an embodiment, the first reference signal is on the first candidate cell.

In an embodiment, the first reference signal occupies a time-frequency resource of the first candidate cell.

In an embodiment, the first reference signal is configured with an index of the first candidate cell.

In an embodiment, the first reference signal is configured with an LTM-CandidateId of the first candidate cell.

In an embodiment, the first reference signal is configured with a CondReconfigId of the first candidate cell.

In an embodiment, the first reference signal is indicated by a field whose name includes LTM.

In an embodiment, the first reference signal is indicated by a field whose name includes LTM and CSI.

In an embodiment, the first reference signal is indicated by a field whose name includes LTM and SSB.

In an embodiment, the first reference signal is indicated by a field whose name includes LTM and resource.

In an embodiment, the first reference signal is an SSB.

In an embodiment, the first reference signal is a CSI (Channel State Information)-RS (Reference Signal).

In an embodiment, the first reference signal is of downlink.

In an embodiment, the first reference signal is of sidelink.

In an embodiment, the first reference signal is periodic.

In an embodiment, the first reference signal is semi-persistent.

In an embodiment, the first reference signal is indicated by an LTM-CSI-SSB-ResourceSet.

In an embodiment, the first reference signal is indicated by an ltm-CSI-SSB-ResourceList.

In an embodiment, the measurement result for at least the first reference signal includes a measurement result for Q1 reference signals of the first candidate cell; and the first reference signal is one of the Q1 reference signals of the first candidate cell.

In an embodiment, the measurement result for at least the first reference signal is a measurement result for Q1 reference signals of the first candidate cell; and the first reference signal is one of the Q1 reference signals of the first candidate cell.

In an embodiment, the first reference signal is any one of the Q1 reference signals of the first candidate cell.

In an embodiment, the first reference signal is a reference signal with an optimal measurement result in the Q1 reference signals of the first candidate cell.

In an embodiment, the Q1 reference signals are configured by a network.

In an embodiment, the Q1 reference signals are activated by a network.

In an embodiment, the Q1 reference signals are determined by the first node.

In an embodiment, Q1 is configurable.

In an embodiment, Q1 is default.

In an embodiment, Q1 is fixed.

In an embodiment, Q1 is 1.

In an embodiment, Q1 is greater than 1.

In an embodiment, Q1 is not less than 1.

In an embodiment, Q1 is not greater than a predefined maximum value.

In an embodiment, Q1 is not greater than 2.

In an embodiment, Q1 is not greater than 4.

In an embodiment, Q1 is not greater than 8.

In an embodiment, the measurement result for the Q1 reference signals of the first candidate cell are within a given time interval.

In an embodiment, the given time interval is configurable.

In an embodiment, the given time interval is predefined.

In an embodiment, the given time interval is variable.

In an embodiment, the first condition includes a first measurement threshold.

In an embodiment, the first measurement threshold is configurable.

In an embodiment, the first measurement threshold is predefined.

In an embodiment, the first condition includes a first measurement threshold and a time threshold.

In an embodiment, the first condition includes a first measurement threshold and a position threshold.

In an embodiment, the measurement result for at least the first reference signal meeting the first condition includes the measurement result for the Q1 reference signals of the first candidate cell meeting the first measurement threshold; and the first condition includes the first measurement threshold.

In an embodiment, the measurement result for the Q1 reference signals of the first candidate cell is not filtered.

In an embodiment, layer 1 filtering (L1 filtering) is performed on the measurement result for the Q1 reference signals of the first candidate cell.

In an embodiment, layer 3 filtering (L3 filtering) is performed on the measurement result for the Q1 reference signals of the first candidate cell.

In an embodiment, there is one measurement result for the Q1 reference signals of the first candidate cell; and the measurement result for the Q1 reference signals of the first candidate cell meeting the first measurement result means that the measurement result is better than the first measurement threshold.

In an embodiment, the measurement result is an RSRP (Reference Signal Received Power, reference signal received power); and the first measurement threshold is an RSRP threshold.

In an embodiment, the measurement result is RSRQ (Reference Signal Received Quality, reference signal received quality); and the first measurement threshold is an RSRQ threshold.

In an embodiment, the measurement result is an SINR (Signal to Interference plus Noise Ratio, signal to interference plus noise ratio); and the first measurement threshold is an SINR threshold.

In an embodiment, the measurement result is a BLER (Block Error Ratio, block error ratio); and the first measurement threshold is a BLER threshold.

In an embodiment, the measurement result is a value of a counter; and updating of the counter depends on measurement for the Q1 reference signals of the first candidate cell.

In a sub-embodiment of the foregoing embodiment, an indication is sent from a physical layer to an upper layer; in response to receiving the indication, the counter is updated at a MAC sublayer (sublayer); and sending of the indication to the upper layer depends on measurement for the Q1 reference signals of the first candidate cell.

In a sub-embodiment of the foregoing embodiment, updating of the counter means increasing the counter by 1.

In an embodiment, there are Q1 measurement results for the Q1 reference signals of the first candidate cell; and the measurement results for the Q1 reference signals of the first candidate cell meeting the first measurement threshold means that each of the Q1 measurement results is better than the first measurement threshold.

In an embodiment, the Q1 measurement results are respectively Q1 RSRPs; and the first measurement threshold is an RSRP threshold.

In an embodiment, the Q1 measurement results are respectively Q1 RSRQ; and the first measurement threshold is an RSRQ threshold.

In an embodiment, the Q1 measurement results are respectively Q1 SINRs; and the first measurement threshold is an SINR threshold.

In an embodiment, the Q1 measurement results are respectively Q1 BLERs; and the first measurement threshold is an SINR threshold.

In an embodiment, "better than" means "greater than"; and the first measurement threshold is an RSRP threshold, an RSRQ threshold, or an SINR threshold.

In an embodiment, "better than" means "not less than"; and the first measurement threshold is an RSRP threshold, an RSRQ threshold, or an SINR threshold.

In an embodiment, "better than" means "less than"; and the first measurement threshold is a BLER threshold.

In an embodiment, "better than" means "not greater than"; and the first measurement threshold is a BLER threshold.

In an embodiment, the first signaling is transmitted through a DCCH.

In an embodiment, the first signaling is transmitted through an SRB1.

In an embodiment, the first signaling is transmitted through a split SRB1.

In an embodiment, the first signaling is transmitted through an SRB3.

In an embodiment, the first signaling is transmitted through a PUSCH (Physical uplink shared channel, physical uplink shared channel).

In an embodiment, the first signaling includes at least one RRC message.

In an embodiment, the first signaling is an RRC message.

In an embodiment, the first signaling includes an RRC message whose name includes RRC, Reconfiguration, and Complete.

In an embodiment, the first signaling includes an RRCReconfigurationComplete message.

In an embodiment, the first signaling includes a UEAssistanceInformation message.

In an embodiment, the first signaling includes a UEAssistanceInformation message, and the ULInformationTransferMRDC message includes an RRCReconfigurationComplete message.

In an embodiment, the first signaling includes a ULInformationTransferMRDC message.

In an embodiment, the first signaling includes a ULInformationTransferMRDC message, and the ULInformationTransferMRDC message includes an RRCReconfigurationComplete message.

In an embodiment, the first signaling includes at least one MAC CE.

In an embodiment, the first signaling is a MAC CE.

In an embodiment, the first signaling indicates that application of the target configuration of the first candidate cell completes.

In an embodiment, the first signaling indicates that the target configuration of the first candidate cell is applied.

In an embodiment, the first signaling is 1st uplink signaling sent on the first candidate cell.

In an embodiment, the first signaling is an initial transmission (initial transmission).

In an embodiment, the first signaling is 1st uplink signaling sent on the first candidate cell after the first condition is met.

In an embodiment, the first signaling is a 1st PUSCH transmission sent on the first candidate cell after the first condition is met.

In an embodiment, any CG resource in the at least one CG resource is configured for only one candidate cell; and the only one candidate cell is the first candidate cell.

In an embodiment, any CG resource in the at least one CG resource is configured for a plurality of candidate cells; and the first candidate cell is one of the plurality of candidate cells.

In an embodiment, the first CG resource is any one of the at least one CG resource.

In an embodiment, the first CG resource is a CG resource associated with the first reference signal in the at least one CG resource.

In an embodiment, at least one of the at least one CG resource is not associated with the first reference signal.

In an embodiment, the first CG resource is valid (valid) according to TS 38.214.

In an embodiment, sending of the first signaling on the first CG resource includes: determining the first CG resource.

In a sub-embodiment of the foregoing embodiment, the first CG resource is determined from the at least one CG resource.

In a sub-embodiment of the foregoing embodiment, determining of the first CG resource means selection of the first CG resource.

In a sub-embodiment of the foregoing embodiment, the first CG resource is selected from the at least one CG resource.

In a sub-embodiment of the foregoing embodiment, determining of the first CG resource means considering (consider) that the first CG resource is valid (valid).

In an embodiment, sending of the first signaling on the first CG resource includes: selecting the first reference signal.

In an embodiment, sending of the first signaling on the first CG resource includes: indicating the first reference signal to a lower layer.

In an embodiment, sending of the first signaling on the first CG resource includes: performing RACH-less movement.

In an embodiment, the RACH-less movement is RACH-less LTM cell switch.

In an embodiment, the RACH-less movement is RACH-less LTM cell switch based on CG.

In an embodiment, the RACH-less movement is RACH-less CHO.

In an embodiment, the RACH-less movement is RACH-less CHO based on CG.

In an embodiment, the RACH-less movement is RACH-less CPC.

In an embodiment, the RACH-less movement is RACH-less CPC based on CG.

In an embodiment, sending of the first signaling on the first CG resource includes: considering that an NDI (New Data Indicator) bit corresponding to a HARQ (Hybrid Automatic Repeat Request, hybrid automatic repeat request) process corresponding to the first CG resource is flipped.

In an embodiment, sending of the first signaling on the first CG resource includes: delivering the first CG resource and associated HARQ information to a corresponding HARQ entity.

In an embodiment, sending of the first signaling on the first CG resource includes: obtaining a to-be-sent MAC PDU from a multiplexing and assembly entity (Multiplexing and assembly entity) and indicating a HARQ process to trigger a new transmission, where the HARQ procedure is a HARQ procedure corresponding to the first CG resource; and the MAC PDU includes at least the first signaling.

In an embodiment, that sending of the first signaling on the first CG resource depends on at least the first CG resource being associated with the first reference signal means that at least the first CG resource is associated with the first reference signal to determine to send the first signaling on the first CG resource.

In an embodiment, that sending of the first signaling on the first CG resource depends on at least the first CG resource being associated with the first reference signal means that the first CG resource is associated with the first reference signal to determine to send the first signaling on the first CG resource.

In an embodiment, in response to the measurement result for at least the first reference signal meeting the first condition, when at least the first CG reference signal is not associated with the first reference signal, the target configuration is applied and the first signaling is not sent on the first CG resource.

In an embodiment, that the first signaling is not sent on the first CG resource means considering that the first CG resource is not valid (not valid).

In an embodiment, that the first signaling is not sent on the first CG resource means not performing RACH-less movement.

In an embodiment, that the first signaling is not sent on the first CG resource means initiating a random access process.

### Embodiment 2

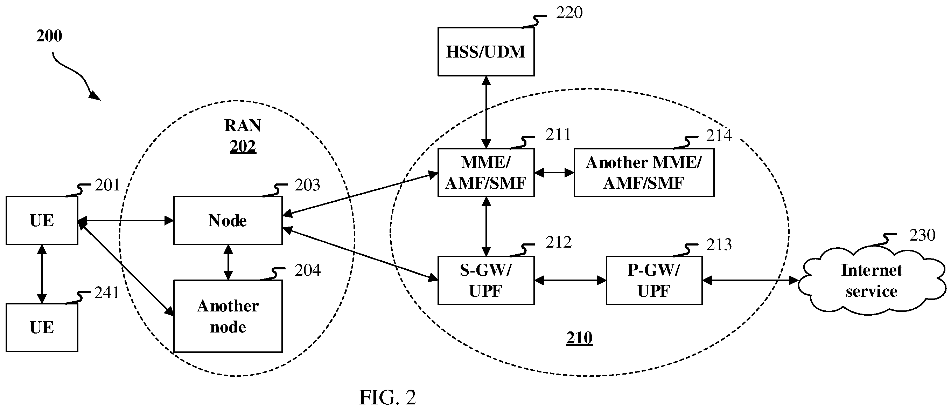

Embodiment 2 illustrates a schematic diagram of a network architecture according to an embodiment of this application, as shown in FIG. 2. FIG. 2 describes a network architecture 200. The network architecture 200 is a 5G NR (New Radio, new radio)/LTE (Long-Term Evolution, long-term evolution)/LTE-A (Long-Term Evolution Advanced, long-term evolution advanced) system, or the network architecture 200 is a 5G+ network architecture, or the network architecture 200 is a 6G network architecture, or the network architecture 200 is a network architecture that 3GPP continues to evolve in the future. The network architecture 200 may be referred to as a 5GS (5G System)/EPS (Evolved Packet System, evolved packet system), or the network architecture 200 may be referred to as a 6GS (6G System). The network architecture 200 includes at least one of a UE (User Equipment, user equipment) 201, a RAN (radio access network) 202, a core network 210, an HSS (Home Subscriber Server, home subscriber server)/UDM (Unified Data Management, unified data management) 220, and an Internet service 230. The network architecture 200 may be interconnected with another access network, but these entities/interfaces are not shown for simplicity. As shown in the figure, the network architecture 200 provides a packet switching service. However, a person skilled in the art will readily understand that the various concepts presented throughout this application can be extended to a network providing a circuit switching service or another cellular network. The RAN includes a node 203 and another node 204. The node 203 provides user and control plane protocol termination towards the UE 201. The node 203 may be connected to the another node 204 through an Xn interface (for example, backhaul)/X2 interface. The node 203 may also be referred to as a base station, a base transceiver station, a radio base station, a radio transceiver, a transceiver function, a basic service set (BSS), an extended service set (ESS), a TRP (transmitter receiver point), or some other suitable terminology. The core network 210 is a 5GC (5G Core Network, 5G core network)/EPC (Evolved Packet Core, evolved packet core), or the core network 210 is a 6GC. The node 203 provides an access point to the core network 210 for the UE 201. Instances of the UE 201 include a cellular phone, a smartphone, a session initiation protocol (SIP) phone, a laptop computer, a personal digital assistant (PDA), satellite radio, non-terrestrial base station communication, satellite mobile communication, a global positioning system, a multimedia apparatus, a video apparatus, a digital audio player (for example, an MP3 player), a camera, a game console, a drone, an aircraft, a narrowband Internet of things device, a machine type communication device, a terrestrial vehicle, an automobile, a wearable device, or any other apparatus having a similar function. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminology. The node 203 is connected to the core network 210 through an S1/NG interface. The core network 210 includes an MME (Mobility Management Entity, mobility management entity)/AMF (Authentication Management Field, authentication management field)/SMF (Session Management Function, session management function) 211, another MME/AMF/SMF 214, an S-GW (Service Gateway, service gateway)/UPF (User Plane Function, user plane function) 212, and a P-GW (Packet Data Network Gateway, packet data network gateway)/UPF 213. The MME/AMF/SMF 211 is a control node that processes signaling between the UE 201 and the core network 210. Generally, the MME/AMF/SMF 211 provides bearer and connection management. All user IP (Internet Protocal, Internet protocol) packets are transmitted through the S-GW/UPF 212, and the S-GW/UPF 212 is connected to the P-GW/UPF 213. The P-GW provides UE IP address allocation and other functions. The P-GW/UPF 213 is connected to the Internet service 230. The Internet service 230 includes an operator-corresponding Internet protocol service, which may specifically include an Internet, an Intranet, an IMS (IP Multimedia Subsystem, IP multimedia subsystem), and a packet switching streaming service.

In an embodiment, the UE 201 is a user equipment (User Equipment, UE).

In an embodiment, the UE 201 is a base station (BaseStation, BS) device.

In an embodiment, the UE 201 is a relay (Relay) device.

In an embodiment, the UE 201 is a gateway (Gateway) device.

In an embodiment, the node 203 corresponds to the second node in this application.

In an embodiment, the node 203 is a base station device.

In an embodiment, the node 203 is a user equipment.

In an embodiment, the node 203 is a relay device.

In an embodiment, the node 203 is a gateway device.

In an embodiment, the node 204 corresponds to the third node in this application.

In an embodiment, the node 204 is a base station device.

In an embodiment, the node 204 is a user equipment.

In an embodiment, the node 204 is a relay device.

In an embodiment, the node 204 is a gateway device.

In an embodiment, the UE 201 simultaneously maintains connections to the node 203 and the node 204.

In an embodiment, the node 203 and the node 204 are connected through an ideal backhaul.

In an embodiment, the node 203 and the node 204 are connected through a non-ideal backhaul.

In an embodiment, the node 203 and the node 204 simultaneously provide wireless resources for the UE 201.

In an embodiment, the node 203 and the node 204 do not simultaneously provide wireless resources for the UE 201.

In an embodiment, the node 203 and the node 204 are a same CU.

In an embodiment, the node 203 and the node 204 are two different CUs.

In an embodiment, the node 203 and the node 204 are a same DU.

In an embodiment, the node 203 and the node 204 are two different DUs.

Typically, the UE 201 is a user equipment, the node 203 is a base station device, and the node 204 is a base station device.

Typically, the UE 201 is a user equipment, the node 203 is a user equipment, and the node 204 is a user equipment.

Typically, the UE 201 is a base station device, the node 203 is a base station device, and the node 204 is a base station device.

In an embodiment, the user equipment supports low-latency and high-reliability transmission.

In an embodiment, the user equipment supports at least one of a non-terrestrial network (Non-Terrestrial Network, NTN) or a terrestrial network (Terrestrial Network, terrestrial Network).

In an embodiment, the user equipment supports dual connection (Dual Connection, DC).

In an embodiment, the user equipment supports carrier aggregation.

In an embodiment, the user equipment supports LTM.

In an embodiment, the user equipment supports conditional LTM.

In an embodiment, the user equipment supports CHO.

In an embodiment, the user equipment supports CPC.

In an embodiment, the user equipment supports RACH-less.

In an embodiment, the user equipment is a mobile terminal.

In an embodiment, the user equipment is a mobile phone or a tablet computer.

In an embodiment, the user equipment is an aircraft.

In an embodiment, the user equipment is an Internet of things device, and the Internet of things device is an Internet of things terminal, a vehicle-mounted terminal, a ship, or an industrial Internet of things terminal.

In an embodiment, the user equipment is a test device or a signaling tester.

In an embodiment, the user equipment is an IAB (Integrated Access and Backhaul)-MT.

In an embodiment, the base station device supports a transmission in a non-terrestrial network.

In an embodiment, the base station device supports a transmission in a terrestrial network.

In an embodiment, the base station device is a macro cellular (Macro Cellular) base station, a micro cell (Micro Cell) base station, a pico cell (Pico Cell) base station, or a femtocell (Femtocell) base station. The base station device is a base transceiver station (Base Transceiver Station, BTS), a NodeB (NodeB, NB), a gNB, an eNB, an ng-eNB, or an en-gNB.

In an embodiment, the base station device includes at least one of a CU (Centralized Unit, centralized unit), a DU (Distributed Unit, distributed unit), or a TRP (Transmitter Receiver Point, transmitter receiver point).

In an embodiment, the base station device is an aerial node, and the aerial node is a flight platform device, a satellite device, or an NTN base station.

In an embodiment, the base station device is a test device or a signaling tester.

In an embodiment, the base station device is a gateway device.

In an embodiment, the base station device is an IAB node, and the IAB node is an IAB-node, an IAB-donor, an IAB-donor-CU, an IAB-donor-DU, an IAB-DU, or an IAB-MT.

In an embodiment, the relay device is a relay, and the relay is an L3 relay, an L2 relay, or an L1 relay.

In an embodiment, the relay device is a router.

In an embodiment, the relay device is an RIS.

In an embodiment, the relay device is a switch or a gateway device.

In an embodiment, the relay device is a user equipment.

In an embodiment, the relay device is a network device.

### Embodiment 3

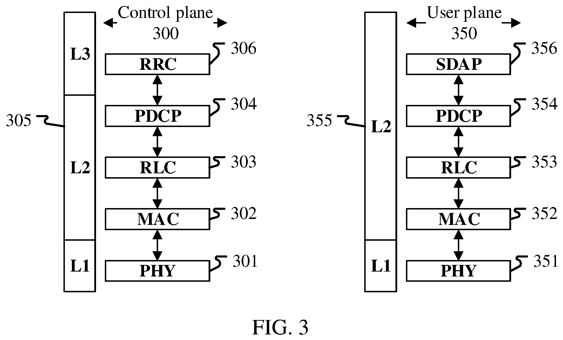

Embodiment 3 illustrates a schematic diagram of an embodiment of radio protocol architectures for a user plane and a control plane according to this application, as shown in FIG. 3. FIG. 3 is a schematic diagram describing the embodiment of the radio protocol architectures used for the user plane 350 and the control plane 300, and FIG. 3 shows, with three layers of a layer 1, a layer 2, and a layer 3, a radio protocol architecture used for the control plane 300. The layer 1 (L1 layer) is a lowest layer and implements various PHY (physical layer) signal processing functions. The L1 layer is referred to as a PHY 301 herein. The layer 2 (L2 layer) 305 is above the PHY 301 and includes a MAC (Medium Access Control, medium access control) sublayer 302, an RLC (Radio Link Control, radio link control protocol) sublayer 303, and a PDCP (Packet Data Convergence Protocol, packet data convergence protocol) sublayer 304. The PDCP sublayer 304 provides multiplexing between different radio bearers and logical channels. The PDCP sublayer 304 also provides security by encrypting a data packet, and provides inter-cell mobility support. The RLC sublayer 303 provides segmentation and reassembly of an upper layer data packet, retransmission of a lost data packet, and reordering of data packets to compensate for out-of-order receiving due to a HARQ (Hybrid Automatic Repeat Request, hybrid automatic repeat request). The MAC sublayer 302 provides multiplexing between logical and transmission channels. The MAC sublayer 302 is also responsible for allocating various radio resources (for example, resource blocks) in a cell. The MAC sublayer 302 is further responsible for a HARQ operation. An RRC (Radio Resource Control, radio resource control) sublayer 306 at the layer 3 (L3 layer) of the control plane 300 is responsible for obtaining a radio resource (for example, a radio bearer) and configuring a lower layer using RRC signaling. A radio protocol architecture for the user plane 350 includes the layer 1 (L1 layer) and the layer 2 (L2 layer). In the user plane 350, the radio protocol architecture is substantially the same as corresponding layers and sublayers in the control plane 300 with respect to a physical layer 351, a PDCP sublayer 354 of the L2 layer 355, an RLC sublayer 353 of the L2 layer 355, and a MAC sublayer 352 of the L2 layer 355, even though the PDCP sublayer 354 further provides header compression for an upper layer data packet to reduce radio transmission overheads. The L2 layer 355 in the user plane 350 also includes an SDAP (Service Data Adaptation Protocol, service data adaptation protocol) sublayer 356, and the SDAP sublayer 356 is responsible for mapping between a QoS flow and a data radio bearer (DRB) to support service diversity.

In an embodiment, the radio protocol architecture in FIG. 3 is applicable to the first node described in this application.

In an embodiment, the radio protocol architecture in FIG. 3 is applicable to the second node described in this application.

In an embodiment, the first RRC message in this application is generated at the RRC 306.

In an embodiment, the first signaling in this application is generated at the MAC 302 or the MAC 352.

In an embodiment, the first signaling in this application is generated at the PHY 301 or the PHY 351.

In an embodiment, the first signaling in this application is generated at the RRC 306.

In an embodiment, the second signaling in this application is generated at the MAC 302 or the MAC 352.

In an embodiment, the second signaling in this application is generated at the PHY 301 or the PHY 351.

In an embodiment, the first signaling in this application is generated at the RRC 306.

In an embodiment, the first signaling in this application is generated at the MAC 302 or the MAC 352.

In an embodiment, each reference signal in the target reference signal set in this application is generated at the PHY 301 or the PHY 351.

### Embodiment 4

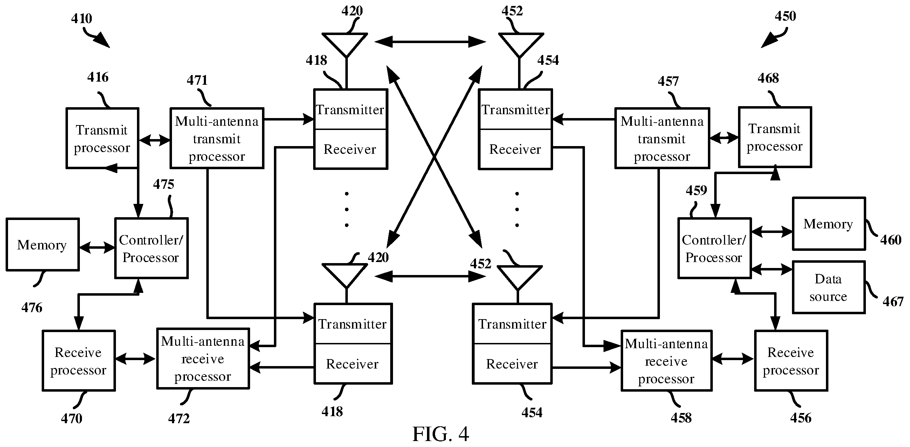

Embodiment 4 illustrates a schematic diagram of a first communication device and a second communication device according to this application, as shown in FIG. 4. FIG. 4 is a block diagram of a first communication device 450 and a second communication device 410 communicating with each other in an access network.

The first communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

The second communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

During a transmission from the second communication device 410 to the first communication device 450, at the second communication device 410, an upper layer data packet from a core network is provided for the controller/processor 475. The controller/processor 475 implements functionality of the L2 layer. During a transmission from the second communication device 410 to the first communication device 450, the controller/processor 475 provides header compression, encryption, packet segmentation and reordering, multiplexing between logical channels and transport channels, and allocation of radio resources of the first communication device 450 based on various priority measurements. The controller/processor 475 is further responsible for retransmission of a lost data packet, and signaling to the first communication device 450. The transmit processor 416 and the multi-antenna transmit processor 471 implement various signal processing functions of the L1 layer (namely, a physical layer). The transmit processor 416 implements encoding and interleaving to facilitate forward error correction (FEC) at the second communication device 410, and mapping of signal clusters based on various modulation schemes (such as binary phase shift keying (BPSK), quadrature phase shift keying (QPSK), M-ary phase shift keying (M-PSK), and M-ary quadrature amplitude modulation (M-QAM)). The multi-antenna transmit processor 471 performs digital space precoding, including codebook-based precoding and non-codebook-based precoding, on a coded and modulated symbol, and beamforming processing, to generate one or more spatial streams. The transmit processor 416 then maps each spatial stream to a subcarrier, multiplexes the mapped spatial stream with a reference signal (for example, a pilot) in time domain and/or frequency domain, and then uses an inverse fast Fourier transform (IFFT) to generate a physical channel that carries a time domain multicarrier symbol stream. Then, the multi-antenna transmit processor 471 performs an operation of analog precoding sending/beamforming on the time domain multicarrier symbol stream. Each transmitter 418 converts a baseband multicarrier symbol stream provided by the multi-antenna transmit processor 471 into a radio frequency stream, and then provides the radio frequency stream to different antennas 420.

During a transmission from the second communication device 410 to the first communication device 450, at the first communication device 450, each receiver 454 receives a signal through a corresponding antenna 452 of the receiver 454. Each receiver 454 restores information modulated onto a radio frequency carrier, converts a radio frequency stream into a baseband multicarrier symbol stream, and provides the baseband multicarrier symbol stream to the receive processor 456. The receive processor 456 and the multi-antenna receive processor 458 implement various signal processing functions of the L1 layer. The multi-antenna receive processor 458 performs an operation of analog precoding receiving/beamforming on the baseband multicarrier symbol stream from the receiver 454. The receive processor 456 converts, from time domain to frequency domain through fast Fourier transform (FFT), the baseband multicarrier symbol stream obtained after the operation of analog precoding receiving/beamforming. In frequency domain, a physical-layer data signal and a reference signal are demultiplexed by the receive processor 456. The reference signal is used for channel estimation; and the data signal is restored after multi-antenna detection performed by the multi-antenna receive processor 458, to obtain any spatial stream that uses the first communication device 450 as a destination. A symbol on each spatial stream is demodulated and restored in the receive processor 456, and a soft decision is generated. The receive processor 456 then decodes and de-interleaves the soft decision to restore upper layer data and a control signal transmitted by the second communication device 410 on a physical channel. The upper layer data and the control signal are then provided to the controller/processor 459. The controller/processor 459 implements functions of the L2 layer. The controller/processor 459 may be associated with the memory 460 that stores program code and data. The memory 460 may be referred to as a computer-readable medium. During a transmission from the second communication device 410 to the first communication device 450, the controller/processor 459 provides demultiplexing between transport and logical channels, data packet reassembly, decryption, header decompression, and control signal processing, to restore an upper layer data packet from the core network. The upper layer data packet is then provided to all protocol layers above the L2 layer. Various control signals may also be provided to L3 for processing by L3.

During a transmission from the first communication device 450 to the second communication device 410, at the first communication device 450, the upper layer data packet is provided to the controller/processor 459 by using the data source 467. The data source 467 represents all protocol layers above the L2 layer. Similar to the sending function, at the second communication device 410, described during the transmission from the second communication device 410 to the first communication device 450, the controller/processor 459 implements header compression, encryption, data packet segmentation and reordering, and multiplexing between logical channels and transport channels based on radio resource allocation, to implement the functions of the L2 layer for the user plane and the control plane. The controller/processor 459 is further responsible for retransmission of a lost data packet, and signaling to the second communication device 410. The transmit processor 468 performs modulation mapping and channel encoding processing, and the multi-antenna transmit processor 457 performs digital multi-antenna spatial precoding, including codebook-based precoding and non-codebook-based precoding, and beamforming processing. Then, the transmit processor 468 modulates a generated spatial stream into a multicarrier/single-carrier symbol stream, and the multicarrier/single-carrier symbol stream is provided to different antennas 452 by using the transmitter 454 after undergoing an operation of analog precoding/beamforming in the multi-antenna transmit processor 457. Each transmitter 454 first converts a baseband symbol stream provided by the multi-antenna transmit processor 457 into a radio frequency symbol stream, and then provides the radio frequency symbol stream to the antenna 452.

During a transmission from the first communication device 450 to the second communication device 410, a function at the second communication device 410 is similar to the receiving function, at the first communication device 450, described during the transmission from the second communication device 410 to the first communication device 450. Each receiver 418 receives a radio frequency signal through a corresponding antenna 420 of the receiver 418, converts the received radio frequency signal into a baseband signal, and provides the baseband signal to the multi-antenna receive processor 472 and the receive processor 470. The receive processor 470 and the multi-antenna receive processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. During a transmission from the first communication device 450 to the second communication device 410, the controller/processor 475 provides demultiplexing between transport channels and logical channels, data packet reassembly, decryption, header decompression, and control signal processing, to restore an upper layer data packet from the UE 450. The upper layer data packet from the controller/processor 475 may be provided to the core network.

In an embodiment, the first communication device 450 corresponds to the first node in this application. The first communication device 450 includes: at least one processor and at least one memory, and the at least one memory includes computer program code. The at least one memory and the computer program code are configured to be used with the at least one processor. The first communication device 450 at least: receives a first RRC message, where the first RRC message includes configuration information of at least a first candidate cell; and the configuration information of at least the first candidate cell indicates a target configuration, a first condition, and at least one CG resource for the first candidate cell, and any CG resource in the at least one CG resource is associated with at least one reference signal of the first candidate cell; and in response to a measurement result for at least a first reference signal meeting the first condition, applies the target configuration and sends the first signaling on a first CG resource, where the first CG resource is one of the at least one CG resource; sending of the first signaling on the first CG resource depends on at least the first CG resource being associated with the first reference signal; and the first reference signal is a reference signal of the first candidate cell.

In an embodiment, the first communication device 450 corresponds to the first node in this application. The first communication device 450 includes: a memory storing a computer-readable instruction program, and the computer-readable instruction program generates actions when being executed by at least one processor. The actions include: receiving a first RRC message, where the first RRC message includes configuration information of at least a first candidate cell; and the configuration information of at least the first candidate cell indicates a target configuration, a first condition, and at least one CG resource for the first candidate cell, and any CG resource in the at least one CG resource is associated with at least one reference signal of the first candidate cell; and in response to a measurement result for at least a first reference signal meeting the first condition, applying the target configuration and sending first signaling on a first CG resource, where the first CG resource is one of the at least one CG resource; sending of the first signaling on the first CG resource depends on at least the first CG resource being associated with the first reference signal; and the first reference signal is a reference signal of the first candidate cell.

In an embodiment, the second communication device 410 corresponds to the second node in this application, and the second communication device 410 includes at least one processor and at least one memory. The at least one memory includes computer program code, and the at least one memory and the computer program code are configured to be used with the at least one processor. The second communication device 410 at least: sends a first RRC message, where the first RRC message includes configuration information of at least a first candidate cell; the configuration information of at least the first candidate cell indicates a target configuration, a first condition, and at least one CG resource for the first candidate cell, and any CG resource in the at least one CG resource is associated with at least one reference signal of the first candidate cell; in response to a measurement result for at least a first reference signal meeting the first condition, a receiving party of the first RRC message applies the target configuration and sends first signaling on a first CG resource, and the first CG resource is one of the at least one CG resource; sending of the first signaling on the first CG resource depends on at least the first CG resource being associated with the first reference signal; and the first reference signal is a reference signal of the first candidate cell.

In an embodiment, the second communication device 410 corresponds to the second node in this application. The second communication device 410 includes: a memory storing a computer-readable instruction program, and the computer-readable instruction program generates actions when being executed by at least one processor. The actions include: sending a first RRC message, where the first RRC message includes configuration information of at least a first candidate cell; the configuration information of at least the first candidate cell indicates a target configuration, a first condition, and at least one CG resource for the first candidate cell, and any CG resource in the at least one CG resource is associated with at least one reference signal of the first candidate cell; in response to a measurement result for at least a first reference signal meeting the first condition, a receiving party of the first RRC message applies the target configuration and sends first signaling on a first CG resource, and the first CG resource is one of the at least one CG resource; sending of the first signaling on the first CG resource depends on at least the first CG resource being associated with the first reference signal; and the first reference signal is a reference signal of the first candidate cell.

In an embodiment, the third communication device 410 corresponds to the third node in this application. The second communication device 410 includes at least one processor and at least one memory. The at least one memory includes computer program code; and the at least one memory and the computer program code are configured to be used with the at least one processor. The second communication device 410 at least: receives first signaling on a first CG resource, where a sending party of the first signaling receives a first RRC message, the first RRC message includes configuration information of at least a first candidate cell; the configuration information of at least the first candidate cell indicates a target configuration, a first condition, and at least one CG resource for the first candidate cell, and any CG resource in the at least one CG resource is associated with at least one reference signal of the first candidate cell; in response to a measurement result for at least a first reference signal meeting the first condition, the sending party of the first signaling applies the target configuration and sends first signaling on a first CG resource, and the first CG resource is one of the at least one CG resource; sending of the first signaling on the first CG resource depends on at least the first CG resource being associated with the first reference signal; and the first reference signal is a reference signal of the first candidate cell.

In an embodiment, the third communication device 410 corresponds to the third node in this application. The second communication device 410 includes: a memory storing a computer-readable instruction program, and the computer-readable instruction program generates actions when being executed by at least one processor. The actions include: receiving first signaling on a first CG resource, where a sending party of the first signaling receives a first RRC message, the first RRC message includes configuration information of at least a first candidate cell; the configuration information of at least the first candidate cell indicates a target configuration, a first condition, and at least one CG resource for the first candidate cell, and any CG resource in the at least one CG resource is associated with at least one reference signal of the first candidate cell; in response to a measurement result for at least a first reference signal meeting the first condition, the sending party of the first signaling applies the target configuration and sends the first signaling on a first CG resource, and the first CG resource is one of the at least one CG resource; sending of the first signaling on the first CG resource depends on at least the first CG resource being associated with the first reference signal; and the first reference signal is a reference signal of the first candidate cell.

In an embodiment, at least one of the antenna 452, the receiver 454, the receive processor 456, and the controller/processor 459 is used to receive the first RRC message.

In an embodiment, at least one of the antenna 420, the transmitter 418, the transmit processor 416, and the controller/processor 475 is used to send the first RRC message.

In an embodiment, at least one of the antenna 452, the transmitter 454, the transmit processor 468, and the controller/processor 459 is used to send the first signaling.

In an embodiment, at least one of the antenna 420, the receiver 418, the receive processor 470, and the controller/processor 475 is used to receive the first signaling.

In an embodiment, at least one of the antenna 452, the receiver 454, the receive processor 456, and the controller/processor 459 is used to detect each reference signal in a target reference signal set.

In an embodiment, at least one of the antenna 420, the transmitter 418, the transmit processor 416, and the controller/processor 475 is used to send each reference signal in the target reference signal set.

In an embodiment, at least one of the antenna 452, the receiver 454, the receive processor 456, and the controller/processor 459 is used to receive the second signaling.

In an embodiment, at least one of the antenna 420, the transmitter 418, the transmit processor 416, and the controller/processor 475 is used to send the second signaling.

In an embodiment, the first communication device 450 is a user equipment.

In an embodiment, the first communication device 450 is a base station device.

In an embodiment, the first communication device 450 is a relay device.

In an embodiment, the second communication device 410 is a user equipment.

In an embodiment, the second communication device 410 is a base station device.

In an embodiment, the second communication device 410 is a relay device.

### Embodiment 5

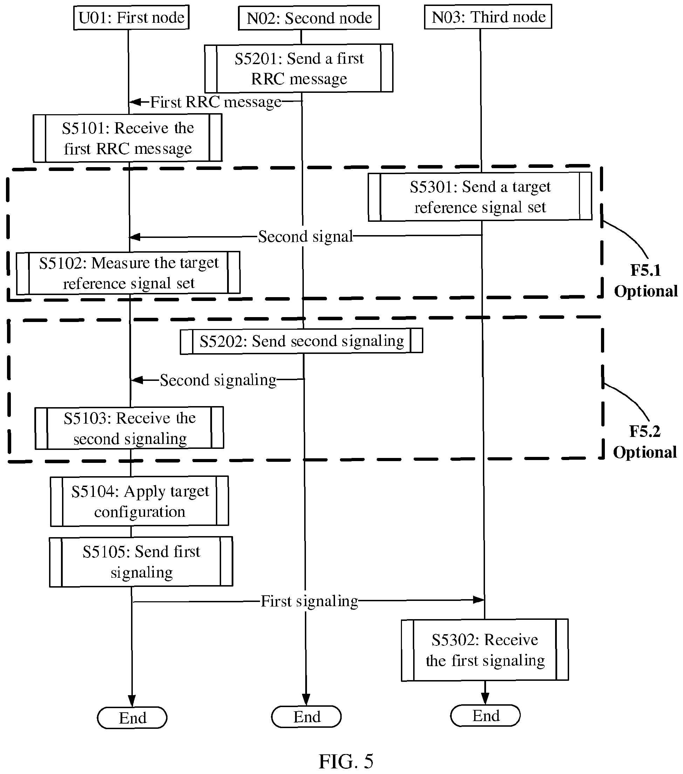

Embodiment 5 illustrates a flowchart of a transmission of a wireless signal according to an embodiment of this application, as shown in FIG. 5. It should be particularly noted that an order in this example does not limit a signal transmission order and an implementation order in this application.

The first node U01, in step S5101, receives a first RRC message, where the first RRC message includes configuration information of at least a first candidate cell; and the configuration information of at least the first candidate cell indicates a target configuration, a first condition, and at least one CG resource for the first candidate cell, and any CG resource in the at least one CG resource is associated with at least one reference signal of the first candidate cell; in step S5102, measures a target reference signal set, where the target reference signal set includes one or more reference signals of the first candidate cell, and the first reference signal is one reference signal in the target reference signal set; and measurement of the target reference signal set depends on one TCI state associated with any reference signal in the target reference signal set being activated; in step S5103, receives second signaling, where the second signaling indicates activation of at least one of at least one TCI state; and the second signaling is signaling of a protocol layer below an RRC sublayer; in step S5104, in response to a measurement result for at least the first reference signal meeting the first condition, applies the target configuration; and in step S5105, in response to the measurement result for at least the first reference signal meeting the first condition, sends the first signaling on the first CG resource, where the first CG resource is one of the at least one CG resource.

The second node N02, in step S5201, sends the first RRC message; and in step S5202, sends the second signaling.

The third node N02, in step S5301, sends the target reference signal set; and in step S5302, receives the first signaling.

In Embodiment 5, sending of the first signaling on the first CG resource depends on at least the first CG resource being associated with the first reference signal; and the first reference signal is a reference signal of the first candidate cell.

In an embodiment, the first node U01 and the second node N02 are connected in a wireless manner.

In an embodiment, the first node U01 and the second node N02 are connected in a wired manner.

In an embodiment, the first node U01 and the second node N02 are connected through a Uu interface.

In an embodiment, the first node U01 and the second node N02 are connected through an IAB interface.

In an embodiment, the first node U01 and the second node N02 are connected through a PC5 interface.

In an embodiment, the third node N03 and the second node N02 are connected through a wireless interface.

In an embodiment, the third node N03 and the second node N02 are connected through a wired interface.

In an embodiment, there is an ideal backhaul between the third node N03 and the second node N02.

In an embodiment, there is a non-ideal backhaul between the third node N03 and the second node N02.

In an embodiment, the third node N03 and the second node N02 are connected through an Xn interface.

In an embodiment, the third node N03 and the second node N02 belong to a same CU.

In an embodiment, the third node N03 and the second node N02 belong to different CUs.

In an embodiment, the third node N03 and the second node N02 belong to a same DU.

In an embodiment, the third node N03 and the second node N02 belong to different DUs.

In an embodiment, each of the third node N03 and the second node N02 is a DU.

In an embodiment, a dashed-line box F5.1 is optional.

In an embodiment, the dashed-line box F5.1 does not exist.

In an embodiment, the dashed-line box F5.1 exists.

In an embodiment, the measurement includes detecting (detect).

In an embodiment, the measurement includes monitoring (monitor).

In an embodiment, the measurement does not use filtering.

In an embodiment, the measurement uses layer 1 filtering.

In an embodiment, the measurement uses layer 3 filtering.

In an embodiment, measurement of the target reference signal set means measuring each reference signal in the measurement target reference signal set.

In an embodiment, measurement of the target reference signal set means measuring at least some reference signals in the measurement target reference signal set.

In an embodiment, in response to the action of receiving the first RRC message, measurement of the target reference signal set starts.

In an embodiment, in response to a condition being met, measurement of the target reference signal set starts.

In a sub-embodiment of the foregoing embodiment, the condition is preconfigured.

In a sub-embodiment of the foregoing embodiment, the condition depends on measurement.

In a sub-embodiment of the foregoing embodiment, the condition depends on inference.

In a sub-embodiment of the foregoing embodiment, the condition includes movement from a previous SpCell to a current SpCell.

In a sub-embodiment of the foregoing embodiment, the condition includes a case that a time meets a threshold.

In a sub-embodiment of the foregoing embodiment, the condition includes a case that a time interval meets a threshold.

In an embodiment, after indication by the action of receiving the first RRC message, at least one signaling is received, where any signaling in the at least one signaling indicates one or more reference signals in the target reference signal set; and in response to receiving any signaling in the at least one signaling, measurement of a reference signal indicated by the any signaling in the target reference signal set starts.

In a sub-embodiment of the foregoing embodiment, the at least one signaling includes at least one RRC IE.

In a sub-embodiment of the foregoing embodiment, the at least one signaling includes at least one RRC field.

In a sub-embodiment of the foregoing embodiment, the at least one signaling includes at least one MAC CE.

In a sub-embodiment of the foregoing embodiment, the at least one signaling includes at least one piece of DCI.

In a sub-embodiment of the foregoing embodiment, any signaling in the at least one signaling indicates activation of the reference signal indicated by the any signaling in the target reference signal set.

In a sub-embodiment of the foregoing embodiment, any signaling in the at least one signaling indicates to start measurement of the reference signal indicated by the any signaling in the target reference signal set.

In an embodiment, any TCI state associated with any reference signal in the target reference signal set is configured by an ltm-DL-OrJointTCI-StateToAddModList.

In an embodiment, any TCI state associated with any reference signal in the target reference signal set is configured by an ltm-UL-TCI-StatesToAddModList.

In an embodiment, any TCI state associated with any reference signal in the target reference signal set is configured by any one of an ltm-UL-TCI-StatesToAddModList and an ltm-DL-OrJointTCI-StateToAddModList.

In an embodiment, any TCI state associated with any reference signal in the target reference signal set is indexed by a TCI-StateId.

In an embodiment, any TCI state associated with any reference signal in the target reference signal set is indexed by a TCI-UL-StateId.

In an embodiment, any TCI state associated with any reference signal in the target reference signal set is indexed by any one of a TCI-StateId and a TCI-UL-StateId.

In an embodiment, the first reference signal is any reference signal in the target reference signal set.

In an embodiment, the first reference signal is a specified reference signal in the target reference signal set.

In an embodiment, the first reference signal is a better reference signal in the target reference signal set.

In an embodiment, the first reference signal is an optimal reference signal in the target reference signal set.

In an embodiment, any reference signal in the Q1 reference signals is one reference signal in the target reference signal set.

In an embodiment, the Q1 reference signals belong to the target reference signal set.

In an embodiment, the Q1 reference signals are the target reference signal set.

In an embodiment, the Q1 reference signals are some reference signals in the target reference signal set.

In an embodiment, if any TCI state associated with a reference signal of the first candidate cell is not activated, the reference signal of the first candidate cell is not measured; and the target reference signal set does not include the reference signal of the first candidate cell.

In an embodiment, if at least one TCI state associated with a reference signal of the first candidate cell is activated, the reference signal of the first candidate cell is measured; and the target reference signal set includes the reference signal of the first candidate cell.

In an embodiment, at least one TCI state associated with any reference signal in the target reference signal set is activated.

In an embodiment, each TCI state associated with any reference signal in the target reference signal set is activated.

In an embodiment, any reference signal in the target reference signal set is periodic.

In an embodiment, any reference signal in the target reference signal set is semi-persistent.

In an embodiment, any reference signal in the target reference signal set is periodic or semi-persistent.

In an embodiment, any reference signal in the target reference signal set is an RS.

In an embodiment, any reference signal in the target reference signal set is an SSB.

In an embodiment, any reference signal in the target reference signal set is a CSI-RS.

In an embodiment, at least one reference signal in the target reference signal set is configured by an RRC field whose name includes LTM and Config.

In an embodiment, any reference signal in the target reference signal set is configured by an LTM-SSB-Config.

In an embodiment, at least one reference signal in the target reference signal set is configured by an LTM-SSB-Config.

In an embodiment, a dashed-line box F5.2 is optional.

In an embodiment, the dashed-line box F5.2 exists.

In an embodiment, the dashed-line box F5.2 does not exist.

In an embodiment, the second signaling is one piece of DCI.

In an embodiment, the second signaling is a MAC CE.

In an embodiment, the second signaling is a Candidate Cell TCI States Activation/Deactivation MAC CE.

In an embodiment, the second signaling includes one Candidate Cell ID field, and the Candidate Cell ID field indicates an index of the first candidate cell.

In an embodiment, the second signaling includes at least one TCI state ID field, and the at least one TCI state ID field respectively indicates the at least one TCI state.

In an embodiment, the second signaling includes at least one index, and the at least one index respectively indicates the at least one TCI state.

In an embodiment, the second signaling includes one index, and the index indicates the at least one TCI state.

In an embodiment, the index is an index of a TCI state set.

In an embodiment, in response to the first signaling being sent, a PDCCH is monitored on the first candidate cell.

In an embodiment, the PDCCH monitored on the first candidate cell is scrambled by a C-RNTI of the first node in the first candidate cell.

In an embodiment, the PDCCH monitored on the first candidate cell schedules a PUSCH.

In an embodiment, the PDCCH monitored on the first candidate cell schedules a PDSCH.

In an embodiment, step S5102 is performed before step S5104.

In an embodiment, step S5103 is performed before step S5104.

In an embodiment, step S5102 is performed before step S5103.

In an embodiment, step S5102 is performed after step S5103.

In an embodiment, step S5103 is performed in a process of performing step S5102.

### Embodiment 6

Embodiment 6 illustrates a schematic diagram of sending of first signaling on a first CG resource depending on timing advance for a first candidate cell being valid according to an embodiment of this application.

In Embodiment 6, sending of the first signaling on the first CG resource depends on timing advance for the first candidate cell being valid.

In an embodiment, in response to the measurement result for at least the first reference signal meeting the first condition, when the timing advance for at least the first candidate cell is valid, the target configuration is applied and the first signaling is sent on the first CG resource.

In an embodiment, in response to the measurement result for at least the first reference signal meeting the first condition, when the timing advance for the first candidate cell is not valid, the target configuration is applied and the first signaling is not sent on the first CG resource.

In an embodiment, sending of the first signaling on the first CG resource depends on at least the first CG resource being associated with the first reference signal and the timing advance for the first candidate cell being valid.

In an embodiment, in response to the measurement result for at least the first reference signal meeting the first condition, when at least the first CG resource is associated with the first reference signal and the timing advance for the first candidate cell is valid, the target configuration is applied and the first signaling is sent on the first CG resource.

In an embodiment, the timing advance for the first candidate cell being valid includes: the timeAlignmentTimer of the timing advance for the first candidate cell is running.

In an embodiment, the timing advance for the first candidate cell being valid means a timeAlignmentTimer for the timing advance for the first candidate cell being running.

In an embodiment, the timing advance for the first candidate cell being valid includes having the timing advance for the first candidate cell.

In an embodiment, the timing advance for the first candidate cell being valid means having the timing advance for the first candidate cell.

In an embodiment, the timing advance for the first candidate cell being valid includes a timeAlignmentTimer for the timing advance for the first candidate cell being running and having the timing advance for the first candidate cell.

In an embodiment, the timing advance for the first candidate cell being valid means a timeAlignmentTimer for the timing advance for the first candidate cell being running and having the timing advance for the first candidate cell.

In an embodiment, the having the timing advance for the first candidate cell means that the first node stores the timing advance for the first candidate cell.

In an embodiment, the having the timing advance for the first candidate cell means that the timing advance for the first candidate cell is configured.

In a sub-embodiment of the foregoing embodiment, the first RRC message indicates the timing advance for the first candidate cell.

In a sub-embodiment of the foregoing embodiment, the configuration information of at least the first candidate cell includes one field, and the field indicates the timing advance for the first candidate cell.

In a sub-embodiment of the foregoing embodiment, the configuration information of at least the first candidate cell includes one field, and the field indicates that the timing advance for the first candidate cell is 0.

In a sub-embodiment of the foregoing embodiment, the first RRC message indicates that the timing advance for the first candidate cell is timing advance for a serving cell.

In an appended embodiment of the foregoing sub-embodiment, the first RRC message indicates that the first candidate cell and the serving cell belong to a same TAG.

In an appended embodiment of the foregoing sub-embodiment, the configuration information of at least the first candidate cell includes a tag-Id, and a TAG indicated by the tag-Id includes the serving cell.

In an appended embodiment of the foregoing sub-embodiment, the configuration information of at least the first candidate cell includes one field, the field indicates the serving cell, and the field indicates that the first candidate cell and the serving cell belong to a same TAG.

In an appended embodiment of the foregoing sub-embodiment, the configuration information of at least the first candidate cell includes one field, the field indicates the serving cell, and the field indicates that the timing advance for the first candidate cell is timing advance for the serving cell.

In an appended embodiment of the foregoing sub-embodiment, the field includes an index of the serving cell.

In a sub-embodiment of the foregoing embodiment, the first RRC message indicates that the timing advance for the first candidate cell is timing advance for a candidate cell other than the first candidate cell.

In an appended embodiment of the foregoing sub-embodiment, the first RRC message indicates that the first candidate cell and the candidate cell belong to a same TAG.

In an appended embodiment of the foregoing sub-embodiment, the configuration information of at least the first candidate cell includes a tag-Id, and a TAG indicated by the tag-Id includes the candidate cell.

In an appended embodiment of the foregoing sub-embodiment, the configuration information of at least the first candidate cell includes one field, the field indicates the candidate cell, and the field indicates that the first candidate cell and the candidate cell belong to a same TAG.

In an appended embodiment of the foregoing sub-embodiment, the configuration information of at least the first candidate cell includes one field, the field indicates the candidate cell, and the field indicates that the timing advance for the first candidate cell is timing advance for the candidate cell.

In an appended embodiment of the foregoing sub-embodiment, the field includes an index of the candidate cell.

In an embodiment, the having the timing advance for the first candidate cell means that the first node determines the timing advance for the first candidate cell.

In a sub-embodiment of the foregoing embodiment, the first node has successfully measured (has successfully measured) the timing advance for the first candidate cell.

In a sub-embodiment of the foregoing embodiment, the first node is configured with timing advance measurement and has successfully measured the timing advance for the first candidate cell.

In a sub-embodiment of the foregoing embodiment, the first node determines the timing advance for the first candidate cell based on prediction.

In a sub-embodiment of the foregoing embodiment, the first node determines the timing advance for the first candidate cell based on AI inference (inference).

In an embodiment, the timing advance for the first candidate cell means timing advance for a PTAG to which the first candidate cell belongs.

In an embodiment, the timing advance for the first candidate cell means timing advance for a TAG to which the first candidate cell belongs.

### Embodiment 7

Embodiment 7 illustrates a schematic diagram of sending of first signaling on a first CG resource depending on a first reference signal being associated with at least one TCI state according to an embodiment of this application.

In Embodiment 7, sending of the first signaling on the first CG resource depends on the first reference signal being associated with at least one TCI state; and the at least one TCI state is activated.

In an embodiment, in response to the measurement result for at least the first reference signal meeting the first condition, when at least the first reference signal is associated with the at least one TCI state, the target configuration is applied and the first signaling is sent on the first CG resource.

In an embodiment, in response to the measurement result for at least the first reference signal meeting the first condition, when the first reference signal is not associated with the at least one TCI state, the target configuration is applied and the first signaling is not sent on the first CG resource.

In an embodiment, sending of the first signaling on the first CG resource depends on at least the first CG resource being associated with the first reference signal and the first reference signal being associated with the at least one TCI state.

In an embodiment, in response to the measurement result for at least the first reference signal meeting the first condition, when at least the first CG resource is associated with the first reference signal and the first reference signal is associated with the at least one TCI state, the target configuration is applied and the first signaling is sent on the first CG resource.

In an embodiment, sending of the first signaling on the first CG resource depends on at least the first CG resource being associated with the first reference signal and the timing advance for the first candidate cell being valid and the first reference signal being associated with the at least one TCI state.

In an embodiment, in response to the measurement result for at least the first reference signal meeting the first condition, when at least the first CG resource is associated with the first reference signal and the timing advance for the first candidate cell is valid and the first reference signal is associated with the at least one TCI state, the target configuration is applied and the first signaling is sent on the first CG resource.

In an embodiment, sending of the first signaling on the first CG resource depends on the timing advance for at least the first candidate cell being valid and the first reference signal being associated with the at least one TCI state.

In an embodiment, in response to the measurement result for at least the first reference signal meeting the first condition, when the timing advance for at least the first candidate cell is valid and the first reference signal is associated with the at least one TCI state, the target configuration is applied and the first signaling is sent on the first CG resource.

In an embodiment, the first RRC message indicates the at least one TCI state.

In an embodiment, the configuration information of at least the first candidate cell indicates the at least one TCI state.

In an embodiment, the configuration information of the first candidate cell indicates the at least one TCI state.

In an embodiment, any TCI state in the at least one TCI state is indicated by an ltm-UL-TCI-StatesToAddModList.

In an embodiment, any TCI state in the at least one TCI state is indicated by an ltm-DL-OrJointTCI-StateToAddModList.

In an embodiment, any TCI state in the at least one TCI state is indicated by any one of an ltm-UL-TCI-StatesToAddModList and an ltm-DL-OrJointTCI-StateToAddModList.

In an embodiment, activation of the at least one TCI state means that any TCI state in the at least one TCI state is activated.

In an embodiment, activation of the at least one TCI state means that any TCI state in the at least one TCI state is an activated (active/activated) TCI state.

In an embodiment, any TCI state in the at least one TCI state is a DL TCI state.

In an embodiment, any TCI state in the at least one TCI state is a UL TCI state.

In an embodiment, any TCI state in the at least one TCI state is a DL or joint TCI state.

In an embodiment, any TCI state in the at least one TCI state is used for a PDCCH.

In an embodiment, at least one TCI state in the at least one TCI state is used for a PDCCH.

In an embodiment, any TCI state in the at least one TCI state is used for a PDSCH.

In an embodiment, at least one TCI state in the at least one TCI state is used for a PDSCH.

In an embodiment, any TCI state in the at least one TCI state is used for a PUCCH.

In an embodiment, at least one TCI state in the at least one TCI state is used for a PUSCH.

In an embodiment, a valid time of the at least one TCI state depends on sending of the first signaling.

In an embodiment, when the first signaling is sent, the at least one TCI state is valid.

In an embodiment, when the first signaling is sent at a physical layer, the at least one TCI state is valid.

In an embodiment, the at least one TCI state is valid at a K1st symbol after the first signaling is sent at the physical layer.

In an embodiment, a valid time of the at least one TCI state depends on the first condition being met.

In an embodiment, the at least one TCI state is valid when the first condition is met.

In an embodiment, the at least one TCI state is valid at a K1st symbol after the first condition is met.

In an embodiment, K1 is a positive integer.

In an embodiment, K1 is predefined.

In an embodiment, K1 is configurable.

In an embodiment, in response to the first signaling being sent, a PDCCH is monitored on the first candidate cell; and monitoring of the PDCCH on the first candidate cell depends on the at least one TCI state.

### Embodiment 8

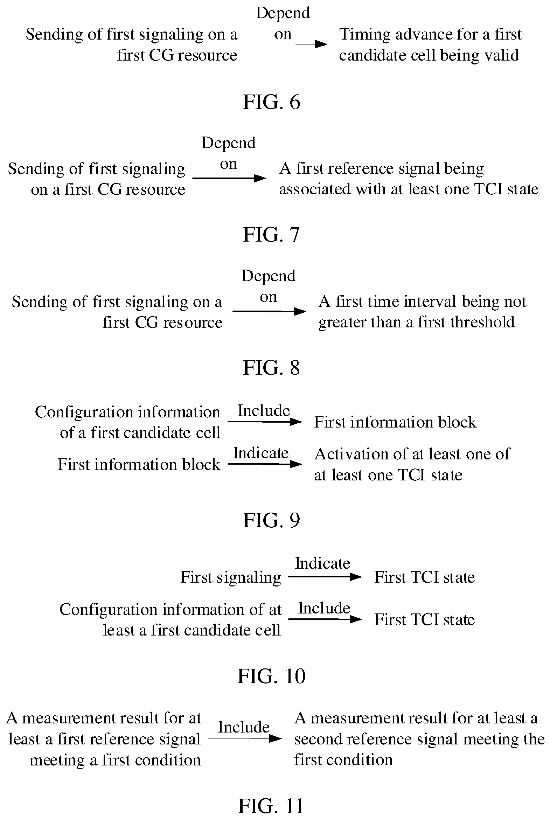

Embodiment 8 illustrates a schematic diagram of sending of first signaling on a first CG resource depending on a first time interval being not greater than a first threshold according to an embodiment of this application, as shown in FIG. 8.

In Embodiment 8, sending of the first signaling on the first CG resource depends on a first time interval being not greater than a first threshold; the first time interval depends on a time domain position of the first CG resource; and the first threshold is indicated by the first RRC message or the first threshold is determined by the first node.

In an embodiment, in response to the measurement result for at least the first reference signal meeting the first condition, when at least the first time interval is not greater than the first threshold, the target configuration is applied and the first signaling is sent on the first CG resource.

In an embodiment, in response to the measurement result for at least the first reference signal meeting the first condition, when the first time interval is greater than the first threshold, the target configuration is applied and the first signaling is not sent on the first CG resource.

In an embodiment, sending of the first signaling on the first CG resource depends on at least the first CG resource being associated with the first reference signal and the first time interval being not greater than the first threshold.

In an embodiment, in response to the measurement result for at least the first reference signal meeting the first condition, when at least the first CG resource is associated with the first reference signal and the first time interval is not greater than the first threshold, the target configuration is applied and the first signaling is sent on the first CG resource.

In an embodiment, sending of the first signaling on the first CG resource depends on the timing advance for at least the first candidate cell being valid and the first time interval being not greater than the first threshold.

In an embodiment, in response to the measurement result for at least the first reference signal meeting the first condition, when at least the timing advance for the first candidate cell is valid and the first time interval is not greater than the first threshold, the target configuration is applied and the first signaling is sent on the first CG resource.

In an embodiment, sending of the first signaling on the first CG resource depends on at least the first CG resource being associated with the first reference signal and the first reference signal being associated with the at least one TCI state and the first time interval being not greater than the first threshold.

In an embodiment, in response to the measurement result for at least the first reference signal meeting the first condition, when at least the first CG resource is associated with the first reference signal and the first reference signal is associated with the at least one TCI state and the first time interval is not greater than the first threshold, the target configuration is applied and the first signaling is sent on the first CG resource.

In an embodiment, sending of the first signaling on the first CG resource depends on at least the first CG resource being associated with the first reference signal and the timing advance for the first candidate cell being valid and the first time interval being not greater than the first threshold.

In an embodiment, in response to the measurement result for at least the first reference signal meeting the first condition, when at least the first CG resource is associated with the first reference signal and the timing advance for the first candidate cell is valid and the first time interval is not greater than the first threshold, the target configuration is applied and the first signaling is sent on the first CG resource.

In an embodiment, sending of the first signaling on the first CG resource depends on at least the first CG resource being associated with the first reference signal and the first reference signal being associated with the at least one TCI state and the timing advance for the first candidate cell being valid and the first time interval being not greater than the first threshold.

In an embodiment, in response to the measurement result for at least the first reference signal meeting the first condition, when at least the first CG resource is associated with the first reference signal and the first reference signal is associated with the at least one TCI state and the timing advance for the first candidate cell is valid and the first time interval is not greater than the first threshold, the target configuration is applied and the first signaling is sent on the first CG resource.

In an embodiment, the time domain position of the first CG resource is a first available (available) CG occasion (occasion) of the first CG resource.

In an embodiment, the time domain position of the first CG resource is a first available (available) CG occasion (occasion) of the first CG resource for an initial transmission of the first signaling.

In an embodiment, the first time interval is a time interval between a first moment and the time domain position of the first CG resource.

In an embodiment, the first moment depends on the first condition being met.

In an embodiment, the first moment is a time when the first condition is met.

In an embodiment, the first moment is a time that is indicated by a lower layer and when the first condition is met.

In an embodiment, the lower layer is a physical layer.

In an embodiment, the first moment depends on the target configuration being applied.

In an embodiment, the first moment is a time when the target configuration is applied.

In an embodiment, the first moment is a time that is indicated by an upper layer and when the target configuration is applied.

In an embodiment, the configuration information of at least the first candidate cell includes the first threshold.

In an embodiment, the configuration information of the first candidate cell includes the first threshold.

In an embodiment, the first threshold is configured.

In an embodiment, the first threshold is configurable.

In an embodiment, when the first threshold is configured, sending of the first signaling on the first CG resource depends on the first time interval being not greater than the first threshold.

In an embodiment, it is assumed that the first threshold is not configured, and sending of the first signaling on the first CG resource does not depend on the first time interval being not greater than the first threshold.

In an embodiment, the first threshold is indicated by the first RRC message.

In an embodiment, an RRC field in the first RRC message indicates the first threshold.

In an embodiment, an RRC field whose name includes at least one of MAX, DURATION, TO, NEXT, CG, or OCCASION in the first RRC message indicates the first threshold.

In an embodiment, a MAX_DURATION_TO_NEXT_CG_OCCASION field in the first RRC message indicates the first threshold.

In an embodiment, the first threshold is determined by the first node.

In an embodiment, it is assumed that a time interval from a time domain resource included in the first CG resource to the target configuration being applied is greater than the first threshold, and a random access process is initiated in the first candidate cell.

In an embodiment, after the target configuration is applied, monitoring of the PDCCH on the first candidate cell starts; when the PDCCH is received and the PDDCH indicates a new uplink transmission, the first signaling is sent in uplink grant indicated by the PDCCH, where the first time interval is greater than the first threshold.

### Embodiment 9

Embodiment 9 illustrates a schematic diagram of a first information block included in configuration information of a first candidate cell indicating activation of at least one of at least one TCI state according to an embodiment of this application, as shown in FIG. 9.

In Embodiment 9, the configuration information of at least the first candidate cell includes a first information block, and the first information block indicates activation of at least one of the at least one TCI state.

In an embodiment, the configuration information of the first candidate cell includes the first information block.

In an embodiment, the first information block is used to activate the TCI state of the first candidate cell.

In an embodiment, the first information block includes an index of each TCI state in the at least one TCI state.

In an embodiment, the first information block indicates to activate one TCI state.

In an embodiment, the first information block indicates to activate one or more TCI states.

In an Embodiment, the first information block indicates the first condition; and if the first information block indicates the first condition, at least one of the at least one TCI state is activated.

In an embodiment, the first information block is an RRC field.

In a sub-embodiment of the foregoing embodiment, if the first information block exists, at least one of the at least one TCI state is activated.

In a sub-embodiment of the foregoing embodiment, if the first information block is set to a target value, at least one of the at least one TCI state is activated.

In a sub-embodiment of the foregoing embodiment, the target value is ture.

In a sub-embodiment of the foregoing embodiment, the target value is active.

In an embodiment, at least one of the at least one TCI state is all TCI states in the at least one TCI state.

In an embodiment, at least one of the at least one TCI state is some TCI states in the at least one TCI state.

In an embodiment, if the first information block indicates at least one of the at least one TCI state, at least one of the at least one TCI state is activated.

### Embodiment 10

Embodiment 10 illustrates a schematic diagram of first signaling indicating a first TCI state according to an embodiment of this application, as shown in FIG. 10.

In Embodiment 10, the first signaling indicates a first TCI state; and the configuration information of at least the first candidate cell includes the first TCI state.

In an embodiment, the first signaling indicates that the first TCI state depends on a UE capability of the first node.

In an embodiment, the first signaling indicates that the first TCI state depends on measurement of the first node.

In an embodiment, the first signaling indicates that the first TCI state depends on the first reference signal being associated with the first TCI state.

In an embodiment, the first signaling indicates a biased TCI state of the first node.

In an embodiment, the first signaling indicates a biased TCI state configured for the first node.

In an embodiment, the first signaling indicates the first TCI state from the at least one activated TCI state.

In an embodiment, the first signaling indicates the first TCI state from TCI states configured by a first RRC.

In an embodiment, the first signaling indicates only one TCI state, and the only one TCI state is the first TCI state.

In an embodiment, the first signaling indicates a plurality of TCI states, and the first TCI state is one of the plurality of TCI states.

In an embodiment, the first signaling is a UEAssistanceInformation message; and one field in the first signaling indicates the first TCI state.

In an embodiment, a name of the first signaling includes Complete; and one field in the first signaling indicates the first TCI state.

In an embodiment, the first signaling is an RRCReconfigurationComplete message; and one field in the first signaling indicates the first TCI state.

In an embodiment, the first signaling is a MAC CE; and one field in the first signaling indicates the first TCI state.

In an embodiment, the first signaling is one piece of UCI (Uplink Control Information); and one field in the first signaling indicates the first TCI state.

In an embodiment, in response to the first signaling being sent, the PDCCH is monitored on the first candidate cell; and monitoring of the PDCCH on the first candidate cell depends on the first TCI state.

In an embodiment, in response to the first signaling indicating the first TCI state, the PDCCH is monitored on the first candidate cell; and monitoring of the PDCCH on the first candidate cell depends on the first TCI state.

### Embodiment 11

Embodiment 11 illustrates a schematic diagram of a first condition being met according to an embodiment of this application, as shown in FIG. 11.

In Embodiment 11, the measurement result for at least the first reference signal meeting the first condition includes: a measurement result for at least a second reference signal meeting the first condition; and the second reference signal is a reference signal of an SpCell.

In an embodiment, the SpCell is a PCell.

In an embodiment, the SpCell is a PSCell.

In an embodiment, the first candidate cell is a candidate cell of the SpCell.

In an embodiment, the second reference signal is sent on the SpCell.

In an embodiment, the second reference signal belongs to the SpCell.

In an embodiment, the second reference signal is on the SpCell.

In an embodiment, the second reference signal occupies a time-frequency resource of the SpCell.

In an embodiment, the second reference signal is configured with an index of the SpCell.

In an embodiment, the second reference signal is an SSB.

In an embodiment, the second reference signal is a CSI-RS.

In an embodiment, the second reference signal is of downlink.

In an embodiment, the second reference signal is of sidelink.

In an embodiment, the second reference signal is periodic.

In an embodiment, the second reference signal is semi-persistent.

In an embodiment, the measurement result for at least the second reference signal includes a measurement result for Q2 reference signals of the SpCell and the measurement result for the Q1 reference signals of the first candidate cell.

In an embodiment, the measurement result for at least the second reference signal is a measurement result for the SpCell and the measurement result for the Q1 reference signals of the first candidate cell.

In an embodiment, the second reference signal is any one of the Q2 reference signals of the first candidate cell.

In an embodiment, the second reference signal is a reference signal with an optimal measurement result in the Q2 reference signals of the SpCell.

In an embodiment, the Q2 reference signals are configured by a network.

In an embodiment, the Q2 reference signals are activated by a network.

In an embodiment, the Q2 reference signals are determined by the first node.

In an embodiment, Q2 is configurable.

In an embodiment, Q2 is default.

In an embodiment, Q2 is fixed.

In an embodiment, Q2 is 1.

In an embodiment, Q2 is greater than 1.

In an embodiment, Q2 is not less than 1.

In an embodiment, Q2 is not greater than a predefined maximum value.

In an embodiment, Q2 is not greater than 2.

In an embodiment, Q2 is not greater than 4.

In an embodiment, Q2 is not greater than 8.

In an embodiment, the measurement result for the Q2 reference signals of the SpCell are within a given time interval.

In an embodiment, the given time interval is configurable.

In an embodiment, the given time interval is predefined.

In an embodiment, the given time interval is variable.

In an embodiment, the first condition includes a second measurement threshold.

In an embodiment, the second measurement threshold is configurable.

In an embodiment, the second measurement threshold is predefined.

In an embodiment, the first condition includes a second measurement threshold and a time threshold.

In an embodiment, the first condition includes a second measurement threshold and a position threshold.

In an embodiment, the measurement result for at least the second reference signal meeting the first condition includes the measurement result for the Q2 reference signals of the SpCell meeting the second measurement threshold; and the first condition includes the second measurement threshold.

In an embodiment, the measurement result for the Q2 reference signals of the SpCell is not filtered.

In an embodiment, layer 1 filtering (L1 filtering) is performed on the measurement result for the Q2 reference signals of the SpCell.

In an embodiment, layer 3 filtering (L3 filtering) is performed on the measurement result for the Q2 reference signals of the SpCell.

In an embodiment, the measurement result for the Q2 reference signals of the SpCell is another measurement result; and the measurement result for the Q2 reference signals of the SpCell meeting the second measurement result means that the another measurement result is worse than the second measurement threshold.

In an embodiment, the another measurement result is an RSRP; and the second measurement threshold is an RSRP threshold.

In an embodiment, the another measurement result is RSRQ; and the second measurement threshold is an RSRQ threshold.

In an embodiment, the another measurement result is an SINR; and the second measurement threshold is an SINR threshold.

In an embodiment, the another measurement result is a BLER; and the second measurement threshold is a BLER threshold.

In an embodiment, the another measurement result is a value of a counter; and updating of the counter depends on measurement for the Q2 reference signals of the SpCell.

In a sub-embodiment of the foregoing embodiment, an indication is sent from a physical layer to an upper layer; in response to receiving the indication, the counter is updated at a MAC sublayer; and sending of the indication to the upper layer depends on measurement for the Q1 reference signals of the SpCell.

In a sub-embodiment of the foregoing embodiment, updating of the counter means increasing the counter by 1.

In an embodiment, there are Q2 measurement results for the Q2 reference signals of the SpCell; and the measurement results for the Q2 reference signals of the SpCell meeting the first measurement threshold means that each of the Q2 measurement results is worse than the first measurement threshold.

In an embodiment, the Q2 measurement results are respectively Q2 RSRPs; and the second measurement threshold is an RSRP threshold.

In an embodiment, the Q2 measurement results are respectively Q2 RSRQ; and the second measurement threshold is an RSRQ threshold.

In an embodiment, the Q2 measurement results are respectively Q2 SINRs; and the second measurement threshold is an SINR threshold.

In an embodiment, the Q2 measurement results are respectively Q2 BLERs; and the second measurement threshold is a BLER threshold.

In an embodiment, "worse than" means "less than"; and the first measurement threshold is an RSRP threshold, an RSRQ threshold, or an SINR threshold.

In an embodiment, "worse than" means "not greater than"; and the first measurement threshold is an RSRP threshold, an RSRQ threshold, or an SINR threshold.

In an embodiment, "worse than" means "greater than"; and the first measurement threshold is a BLER threshold.

In an embodiment, "worse than" means "not less than"; and the first measurement threshold is a BLER threshold.

### Embodiment 12

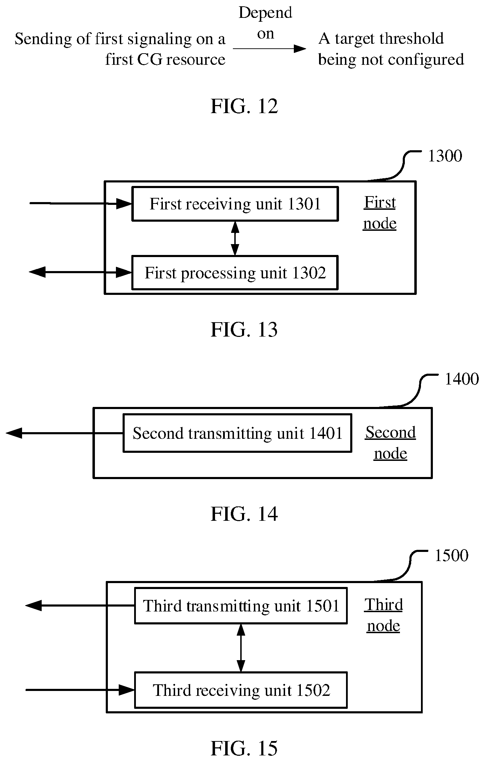

Embodiment 12 illustrates a schematic diagram of sending of first signaling on a first CG resource depending on a target threshold being not configured according to an embodiment of this application, as shown in FIG. 12.

In Embodiment 12, sending of the first signaling on the first CG resource depends on a target threshold being not configured.

In an embodiment, the target threshold is configurable.

In an embodiment, the target threshold is configured by an RRC message.

In an embodiment, the target threshold is specific to a CG resource.

In an embodiment, the target threshold is specific to RACH-less.

In an embodiment, the target threshold is specific to at least one CG resource.

In an embodiment, the target threshold is rach-less-RSRP-ThresholdSSB.

In an embodiment, the target threshold is rach-less-RSRP-ThresholdCSI-RS.

In an embodiment, the target threshold being not configured means that the target threshold is not configured for the first CG resource.

In an embodiment, the target threshold being not configured means that the first RRC message does not include the target threshold.

In an embodiment, the target threshold being not configured means that the configuration information of at least the first candidate cell does not include the target threshold.

In an embodiment, the target threshold being not configured means that the configuration information of the first candidate cell does not include the target threshold.

In an embodiment, the target threshold being not configured means that the target threshold is not configured.

In an embodiment, it is assumed that the target threshold is configured, in response to the measurement result for at least the first reference signal meeting the first condition, the target configuration is applied and first signaling is sent on a second CG resource, and the second CG resource is one of the at least one CG resource; sending of the first signaling on the second CG resource depends on at least one reference signal associated with at least the first CG resource meeting the target threshold; and the first reference signal is a reference signal of the first candidate cell.

### Embodiment 13

Embodiment 13 illustrates a block diagram of a structure of a processing apparatus used in a first node according to an embodiment of this application, as shown in FIG. 13. In FIG. 13, a processing apparatus 1300 in the first node includes a first receiver 1301 and a first processor 1302.

The first receiver 1301 receives a first RRC message, where the first RRC message includes configuration information of at least a first candidate cell, the configuration information of at least the first candidate cell indicates a target configuration, a first condition, and at least one CG resource for the first candidate cell, and any CG resource in the at least one CG resource is associated with at least one reference signal of the first candidate cell.

The first processor 1302, in response to a measurement result for at least a first reference signal meeting the first condition, applies the target configuration and sends first signaling on a first CG resource, where the first CG resource is one of the at least one CG resource.

In Embodiment 13, sending of the first signaling on the first CG resource depends on at least the first CG resource being associated with the first reference signal; and the first reference signal is a reference signal of the first candidate cell.

In an embodiment, sending of the first signaling on the first CG resource depends on timing advance for the first candidate cell being valid.

In an embodiment, sending of the first signaling on the first CG resource depends on the first reference signal being associated with at least one TCI state; and the at least one TCI state is activated.

In an embodiment, the first receiver receives second signaling, where the second signaling indicates activation of at least one of the at least one TCI state; and the second signaling is signaling of a protocol layer below an RRC sublayer.

In an embodiment, the configuration information of at least the first candidate cell includes a first information block, and the first information block indicates activation of at least one of the at least one TCI state.

In an embodiment, the first signaling indicates a first TCI state; and the configuration information of at least the first candidate cell includes the first TCI state.

In an embodiment, the measurement result for at least the first reference signal meeting the first condition includes: a measurement result for at least a second reference signal meeting the first condition; and the second reference signal is a reference signal of an SpCell.

In an embodiment, the first receiver measures a target reference signal set, where the target reference signal set includes one or more reference signals of the first candidate cell, and the first reference signal is a reference signal in the target reference signal set; and measurement of the target reference signal set depends on a TCI state associated with any reference signal in the target reference signal set being activated.

In an embodiment, sending of the first signaling on the first CG resource depends on a target threshold being not configured.

In an embodiment, sending of the first signaling on the first CG resource depends on a first time interval being not greater than a first threshold; the first time interval depends on a time domain position of the first CG resource; and the first threshold is indicated by the first RRC message or the first threshold is determined by the first node.

In an embodiment, the first processor 1201 includes the first receiver 1301.

In an embodiment, the first processor 1201 includes a first transmitter.

In an embodiment, the first processor 1201 includes a first receiver and a first transmitter.

In an embodiment, the first receiver 1301 includes at least one of the antenna 452, the receiver 454, the multi-antenna receive processor 458, the receive processor 456, the controller/processor 459, the memory 460, or the data source 467 in FIG. 4 of this application.

In an embodiment, the first receiver 1301 includes at least the antenna 452 and the receiver 454 in FIG. 4 of this application.

In an embodiment, the first transmitter includes at least one of the antenna 452, the transmitter 454, the multi-antenna transmit processor 457, the transmit processor 468, the controller/processor 459, the memory 460, or the data source 467 in FIG. 4 of this application.

In an embodiment, the first transmitter includes at least the antenna 452 and the transmitter 454 in FIG. 4 of this application.

### Embodiment 14

Embodiment 14 illustrates a block diagram of a structure of a processing apparatus used in a second node according to an embodiment of this application, as shown in FIG. 14. In FIG. 14, a processing apparatus 1400 in the second node includes a second transmitter 1401.

The second transmitter 1401 sends a first RRC message, where the first RRC message includes configuration information of at least a first candidate cell, the configuration information of at least the first candidate cell indicates a target configuration, a first condition, and at least one CG resource for the first candidate cell, and any CG resource in the at least one CG resource is associated with at least one reference signal of the first candidate cell.

In Embodiment 14, in response to a measurement result for at least a first reference signal meeting the first condition, a receiving party of the first RRC message applies the target configuration and sends first signaling on a first CG resource, and the first CG resource is one of the at least one CG resource; sending of the first signaling on the first CG resource depends on at least the first CG resource being associated with the first reference signal; and the first reference signal is a reference signal of the first candidate cell.

In an embodiment, sending of the first signaling on the first CG resource depends on timing advance for the first candidate cell being valid.

In an embodiment, sending of the first signaling on the first CG resource depends on the first reference signal being associated with at least one TCI state; and the at least one TCI state is activated.

In an embodiment, the second transmitter sends second signaling, where the second signaling indicates activation of at least one of the at least one TCI state; and the second signaling is signaling of a protocol layer below an RRC sublayer.

In an embodiment, the configuration information of at least the first candidate cell includes a first information block, and the first information block indicates activation of at least one of the at least one TCI state.

In an embodiment, the first signaling indicates a first TCI state; and the configuration information of at least the first candidate cell includes the first TCI state.

In an embodiment, the measurement result for at least the first reference signal meeting the first condition includes: a measurement result for at least a second reference signal meeting the first condition; and the second reference signal is a reference signal of an SpCell.

In an embodiment, the receiving party of the first RRC message measures a target reference signal set, where the target reference signal set includes one or more reference signals of the first candidate cell, and the first reference signal is a reference signal in the target reference signal set; and measurement of the target reference signal set depends on a TCI state associated with any reference signal in the target reference signal set being activated.

In an embodiment, sending of the first signaling on the first CG resource depends on a target threshold being not configured.

In an embodiment, sending of the first signaling on the first CG resource depends on a first time interval being not greater than a first threshold; the first time interval depends on a time domain position of the first CG resource; and the first threshold is indicated by the first RRC message or the first threshold is determined by the first node.

In an embodiment, the second transmitter 1501 includes at least one of the antenna 420, the transmitter 418, the multi-antenna transmit processor 471, the transmit processor 416, the controller/processor 475, or the memory 476 in FIG. 4 of this application.

In an embodiment, the second transmitter 1501 includes at least the antenna 420 and the transmitter 418 in FIG. 4 of this application.

### Embodiment 15

Embodiment 15 illustrates a block diagram of a structure of a processing apparatus used in a third node according to an embodiment of this application, as shown in FIG. 15. In FIG. 15, a processing apparatus 1500 in the third node includes a third transmitter 1501 and a third receiver 1502.

The third receiver 1502 receives first signaling on a first CG resource.

In Embodiment 15, a sending party of the first signaling receives a first RRC message, where the first RRC message includes configuration information of at least a first candidate cell; the configuration information of at least the first candidate cell indicates a target configuration, a first condition, and at least one CG resource for the first candidate cell, and any CG resource in the at least one CG resource is associated with at least one reference signal of the first candidate cell; in response to a measurement result for at least a first reference signal meeting the first condition, the sending party of the first signaling applies the target configuration and sends the first signaling on a first CG resource, where the first CG resource is one of the at least one CG resource; sending of the first signaling on the first CG resource depends on at least the first CG resource being associated with the first reference signal; and the first reference signal is a reference signal of the first candidate cell.

In an embodiment, sending of the first signaling on the first CG resource depends on timing advance for the first candidate cell being valid.

In an embodiment, sending of the first signaling on the first CG resource depends on the first reference signal being associated with at least one TCI state; and the at least one TCI state is activated.

In an embodiment, the sending party of the first signaling receives second signaling, where the second signaling indicates activation of at least one of the at least one TCI state; and the second signaling is signaling of a protocol layer below an RRC sublayer.

In an embodiment, the configuration information of at least the first candidate cell includes a first information block, and the first information block indicates activation of at least one of the at least one TCI state.

In an embodiment, the first signaling indicates a first TCI state; and the configuration information of at least the first candidate cell includes the first TCI state.

In an embodiment, the measurement result for at least the first reference signal meeting the first condition includes: a measurement result for at least a second reference signal meeting the first condition; and the second reference signal is a reference signal of an SpCell.

In an embodiment, the third transmitter 1501 sends a target reference signal set, where the target reference signal set includes one or more reference signals of the first candidate cell, and the first reference signal is a reference signal in the target reference signal set; and measurement of the target reference signal set depends on a TCI state associated with any reference signal in the target reference signal set being activated.

In an embodiment, sending of the first signaling on the first CG resource depends on a target threshold being not configured.

In an embodiment, sending of the first signaling on the first CG resource depends on a first time interval being not greater than a first threshold; the first time interval depends on a time domain position of the first CG resource; and the first threshold is indicated by the first RRC message or the first threshold is determined by the first node.

In an embodiment, the second transmitter 1501 includes at least one of the antenna 420, the transmitter 418, the multi-antenna transmit processor 471, the transmit processor 416, the controller/processor 475, or the memory 476 in FIG. 4 of this application.

In an embodiment, the second transmitter 1501 includes at least the antenna 420 and the transmitter 418 in FIG. 4 of this application.

In an embodiment, the third receiver 1502 includes at least one of the antenna 420, the receiver 418, the multi-antenna receive processor 472, the receive processor 470, the controller/processor 475, or the memory 476 in FIG. 4 of this application.

In an embodiment, the third receiver 1502 includes at least the antenna 420 and the receiver 418 in FIG. 4 of this application.

A person of ordinary skill in the art may understand that all or some steps of the foregoing methods may be implemented by a program instructing relevant hardware. The program may be stored in a computer-readable storage medium, such as a read-only memory, a hard disk, or an optical disc. Optionally, all or some steps in the foregoing embodiments may alternatively be implemented by using one or more integrated circuits. Correspondingly, the modules and units in the foregoing embodiments may be implemented in a form of hardware, or may be implemented in a form of a software functional module. This application is not limited to any specific form of a combination of software and hardware. The user equipment, the terminal, and the UE in this application include but are not limited to wireless communication devices such as a drone, a communication module on a drone, a remote-controlled aircraft, an aircraft, a small aircraft, a mobile phone, a tablet computer, a notebook computer, a vehicle-mounted communication device, a wireless sensor, a USB dongle, an Internet of things terminal, an RFID terminal, an NB-IOT terminal, an MTC (Machine Type Communication, machine type communication) terminal, an eMTC (enhanced MTC, enhanced MTC) terminal, a data card, a USB dongle, a vehicle-mounted communication device, a low-cost mobile phone, and a low-cost tablet computer. The base station or system device in this application includes but is not limited to a wireless communication device such as a macro cellular base station, a micro cellular base station, a femtocell base station, a relay base station, a gNB (NR NodeB) NR NodeB, or a TRP (Transmitter Receiver Point, Transmitter Receiver Point).

The foregoing descriptions are merely example embodiments of this application, and are not intended to limit the protection scope of this application. Any modification, equivalent replacement, improvement, and the like made within the spirit and principle of this application shall fall within the protection scope of this application.

## Claims

1. A first node used for wireless communication, comprising:
a first receiver, receiving a first RRC message, wherein the first RRC message comprises configuration information of at least a first candidate cell, the configuration information of at least the first candidate cell indicates a target configuration, a first condition, and at least one CG resource for the first candidate cell, and any CG resource in the at least one CG resource is associated with at least one reference signal of the first candidate cell; and
a first processor, in response to a measurement result for at least a first reference signal meeting the first condition, applying the target configuration and sending first signaling on a first CG resource, wherein the first CG resource is one of the at least one CG resource; and
sending of the first signaling on the first CG resource depends on at least the first CG resource being associated with the first reference signal; and the first reference signal is a reference signal of the first candidate cell.

2. The first node according to claim 1, wherein sending of the first signaling on the first CG resource depends on timing advance for the first candidate cell being valid.

3. The first node according to claim 1 or 2, wherein sending of the first signaling on the first CG resource depends on the first reference signal being associated with at least one TCI state; and the at least one TCI state is activated.

4. The first node according to claim 3, wherein:
the first receiver, receives second signaling, wherein
the second signaling indicates activation of at least one of the at least one TCI state; and the second signaling is signaling of a protocol layer below an RRC sublayer.

5. The first node according to claim 3 or 4, wherein the configuration information of at least the first candidate cell comprises a first information block, and the first information block indicates activation of at least one of the at least one TCI state.

6. The first node according to any one of claims 1 to 5, wherein the first signaling indicates a first TCI state; and the configuration information of at least the first candidate cell comprises the first TCI state.

7. The first node according to any one of claims 1 to 6, wherein the measurement result for at least the first reference signal meeting the first condition comprises: a measurement result for at least a second reference signal meeting the first condition; and the second reference signal is a reference signal of an SpCell.

8. The first node according to any one of claims 1 to 7, wherein:
the first receiver, measures a target reference signal set, wherein the target reference signal set comprises one or more reference signals of the first candidate cell, and the first reference signal is a reference signal in the target reference signal set; and
measurement of the target reference signal set depends on one TCI state associated with any reference signal in the target reference signal set being activated.

9. The first node according to any one of claims 1 to 8, wherein sending of the first signaling on the first CG resource depends on a first time interval being not greater than a first threshold; the first time interval depends on a time domain position of the first CG resource; and the first threshold is indicated by the first RRC message or the first threshold is determined by the first node.

10. A method in a first node used for wireless communication, comprising:
receiving a first RRC message, wherein the first RRC message comprises configuration information of at least a first candidate cell, the configuration information of at least the first candidate cell indicates a target configuration, a first condition, and at least one CG resource for the first candidate cell, and any CG resource in the at least one CG resource is associated with at least one reference signal of the first candidate cell; and
in response to a measurement result for at least a first reference signal meeting the first condition, applying the target configuration and sending first signaling on a first CG resource, wherein the first CG resource is one of the at least one CG resource; and
sending of the first signaling on the first CG resource depends on at least the first CG resource being associated with the first reference signal; and the first reference signal is a reference signal of the first candidate cell.

11. A second node used for wireless communication, comprising:
a second transmitter, sending a first RRC message, wherein the first RRC message comprises configuration information of at least a first candidate cell, the configuration information of at least the first candidate cell indicates a target configuration, a first condition, and at least one CG resource for the first candidate cell, and any CG resource in the at least one CG resource is associated with at least one reference signal of the first candidate cell; and
in response to a measurement result for at least a first reference signal meeting the first condition, a receiving party of the first RRC message applies the target configuration and sends first signaling on a first CG resource, and the first CG resource is one of the at least one CG resource; sending of the first signaling on the first CG resource depends on at least the first CG resource being associated with the first reference signal; and the first reference signal is a reference signal of the first candidate cell.

12. A third node used for wireless communication, comprising:
a third receiver, receiving first signaling on a first CG resource, wherein
a sending party of the first signaling receives a first RRC message, and the first RRC message comprises configuration information of at least a first candidate cell; the configuration information of at least the first candidate cell indicates a target configuration, a first condition, and at least one CG resource for the first candidate cell, and any CG resource in the at least one CG resource is associated with at least one reference signal of the first candidate cell; in response to a measurement result for at least a first reference signal meeting the first condition, the sending party of the first signaling applies the target configuration and sends the first signaling on a first CG resource, and the first CG resource is one of the at least one CG resource; sending of the first signaling on the first CG resource depends on at least the first CG resource being associated with the first reference signal; and the first reference signal is a reference signal of the first candidate cell.
